(19) Europäisches Patentamt
European Patent Office
Office européen des brevets

(11) Publication number: **0 111 984 B1**

(12) **EUROPEAN PATENT SPECIFICATION**

(45) Date of publication of patent specification: **02.08.89**

(51) Int. Cl.[4]: **C 11 D 3/00**, C 11 D 3/37, C 11 D 3/30

(21) Application number: **83201809.7**

(22) Date of filing: **17.12.83**

(54) **Ethoxylated amine polymers having clay soil removal/anti-redeposition properties useful in detergent compositions.**

(30) Priority: **23.12.82 US 452463**
**23.12.82 US 452645**

(43) Date of publication of application:
**27.06.84 Bulletin 84/26**

(45) Publication of the grant of the patent:
**02.08.89 Bulletin 89/31**

(84) Designated Contracting States:
**AT BE CH DE FR GB IT LI NL**

(56) References cited:
**EP-A-0 042 187**
**DE-A-2 226 871**
**US-A-4 075 130**
**US-A-4 171 278**

(73) Proprietor: **THE PROCTER & GAMBLE COMPANY**
**301 East Sixth Street**
**Cincinnati Ohio 45202 (US)**

(72) Inventor: **Gosselink, Eugene Paul**
**3754 Susanna Drive**
**Cincinnati Ohio 45239 (US)**
Inventor: **van der Meer, James Michael**
**10283 Pippin Road**
**Cincinnati Ohio 45231 (US)**

(74) Representative: **Ernst, Hubert et al**
**PROCTER & GAMBLE EUROPEAN TECHNICAL CENTER Temselaan 100**
**B-1820 Strombeek-Bever (BE)**

**EP 0 111 984 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical Field

The present application relates to ethoxylated amine polymers having clay-soil removal/anti-redeposition properties when used in detergent compositions.

A particularly important property of a detergent composition is its ability to remove particulate type soils from a variety of fabrics during laundering. Perhaps the most important particulate soils are the clay-type soild. Clay soil particles generally comprise negatively charged layers of aluminosilicates and positively charged cations (e.g. calcium) which are positioned between and hold together the negatively charged layers.

A variety of models can be proposed for compounds which would have clay soil removal properties. One model requires that the compound have two distinct characteristics. The first is the ability of the compound to adsorb onto the negatively charged layers of the clay particle. The second is the ability of the compound, once adsorbed, to push apart (swell) the negatively charged layers so that the clay particle loses its cohesive force and can be removed in the wash water.

One class of clay-soil removal compounds which appears to work according to this model are the polyethoxy zwitterionic surfactants disclosed in U.S. Patent 4,301,044 to Wentler et al., issued November 17, 1981. Representative of such compounds are those having the formula:

$$R^1 - \underset{CH_3}{\overset{CH_3}{N^+}} -(CH_2)_x\overset{O}{\overset{\|}{C}}-O-(CH_2CH_2O)_ySO_3^-$$

wherein $R^1$ is a $C_{14}$—$C_{20}$ alkyl group, x is 1 or an integer of from 3 to 5, and y is from 6 to 12. See also U.S. Patent 3,929,678 to Laughlin et al., issued December 30, 1975 (detergent composition containing polyethoxy zwitterionic surfactant plus other detergent surfactants); U.S. Patent 3,925,262 to Laughlin et al., issued December 9, 1975 (detergent composition containing polyethoxy zwitterionic surfactants with detergent builders); U.S. Patent 4,157,277 to Gosselink et al., issued June 26, 1979 ($C_4$ polyoxyalkylene zwitterionic surfactants useful in detergent compositions); U.S. Patent 4,165,334 to Gosselink et al., issued August 21, 1979 (sulfonium-type polyethoxy zwitterionic surfactants).

These polyethoxy zwitterionic surfactants are generally compatible with other detergent surfactants such as the nonionic, zwitterionic and ampholytic types. However, as suggested in the Wentler et al. patent, most anionic surfactants interfere with the particulate soil removal performance of these compounds; anionic soils such as fatty acids likewise interfere. Because anionic detergent surfactants form the most important class of such materials for use in detergent compositions, the lack of compatibility between these polyethoxy zwitterionic surfactants and anionic surfactants poses a significant handicap where particulate (clay) soil removal is desired.

In addition to clay soil removal, one of the other properties mentioned in the Laughlin et al. patents with regard to these polyethoxy zwitterionic surfactants is the ability to keep the removed soil in suspension during the laundering cycle. Soil which is removed from the fabric and suspended in the wash water can redeposit onto the surface of the fabric. This redeposited soil causes a dulling or "graying" effect which is especially noticeable on white fabrics. Because soil is normally hydrophobic, this graying effect is a particularly important problem for those fabrics made in total or in part from hydrophobic fibers, e.g. polyester.

To minimize this problem, anti-redeposition or whiteness maintenance agents can be included in the detergent composition. Besides the previously mentioned polyethoxy zwitterionic surfactants, there are a variety of other compounds which can be used as anti-redeposition agents. One class of agents are the water-soluble copolymers of acrylic or methacrylic acid with acrylic or methacrylic acid-ethylene oxide condensates disclosed in U.S. Patent 3,719,647 to Hardy et al., issued March 6, 1973. Another class of anti-redeposition agents are the cellulose and carboxymethylcellulose derivatives disclosed in U.S. Patent 3,597,416 to Diehl, issued August 3, 1971 (ionic combination of dodecyltrimethyl phosphonium chloride and sodium carboxymethylcellulose), and U.S. Patent 3,523,088 to Dean et al., issued August 4, 1970 (combination of alkali metal carboxymethylcellulose and hydroxypropylcellulose). A mixture of compounds has also been used to provide not only anti-redeposition, but also clay soil removal properties. See U.S. Patent 4,228,044 to Cambre, issued October 14, 1980, which discloses detergent compositions having anti-redeposition and clay soil removal properties which can comprise a nonionic alkyl polyethoxy surfactant, a polyethoxy alkyl quaternary cationic surfactant and a fatty amide surfactant.

These anti-redeposition agents do have a number of significant handicaps. While effective to keep soil suspended, these compounds may lack additional clay soil removal properties. Moreover, as disclosed in the Diehl and Dean et al. patents, mixtures of compounds can be required to achieve the anti-redeposition benefit. To the extent that there are combined anti-redeposition/clay soil removal benefits as disclosed in the Cambre patent, mixtures of compounds are also required.

It is therefore an object of the present invention to provide compounds useful in detergent compositions which provide particulate soil, especially clay soil, removal benefits.

It is a further object of the present invention to provide compounds useful in detergent compositions which provide clay soil removal benefits and are anionic detergent surfactant compatible.

It is yet another object of the present invention to provide compounds useful in detergent compositions having anti-redeposition properties.

It is yet a further object of the present invention to provide compounds useful in detergent compositions which combine both clay soil removal and anti-redeposition properties.

These and further objects of the present invention are hereinafter disclosed.

## Background Art

U.S. Patent 3,301,783 to Dickson, et al., issued January 31, 1967, discloses oxyalkylated, acylated, alkylated, carbonylated and olefinated derivatives of polyalkyleneimines, in particular polyethyleneimines (PEIs). For the oxyalkylated derivatives, the alkylene oxide (e.g. ethylene oxide) is reacted with the polyalkyleneimine in a mole ratio of from 1:1 to 1000:1, and preferably in a ratio of from 1:1 to 200:1. Among the ethoxylated PEIs disclosed are Examples 1—$0_7$ and 1—$0_8$ formed by condensing 105 and 200 moles, respectively, of ethylene oxide with a 900 M.W. PEI. The degree of ethoxylation calculates out to about 4.5 and about 8 ethoxy groups per reactive site, respectively. See also Examples 27—$0_5$ and 27—$0_6$ which disclose ethoxylated polyporopyleneiminies (M.W. 500) which have about 4 and about 8 ethoxy units per reactive site, respectively. Amongst the numerous disclosed uses of these polyalkyleneimine derivatives is a teaching that they are useful as detergents, softening agents, and anti-static agents. Preferred uses disclosed by this patent are as chelating agents, lubricating oil additives, emulsifying agents, and cutting oils.

U.S. Patent 2,792,371 to Dickson, issued May 14, 1957, teaches a process for breaking petroleum emulsions with oxyalkylated tetraethylene pentaamines (TEPA). Ethoxylated TEPAs specifically disclosed include those having about 5 (Example 3aa), about 7 (Example 4aa), about 8.5 (Example 5a) and about 15.5 (Example Bc) ethoxy units per reactive site. Similarly, U.S. patent 2,792,370 to dickson issued May 14, 1957, teaches a process for breaking petroleum emulsions with oxyalkylated triethylene tetramines (TETAs) including those having about 5.5 (Example 3aa), about 7.5 (Example 4aa), about 9 (Example 5a) and about 16.5 (Example Bc) ethoxy units per reactive site. See also U.S. Patent 2,792,372 to Dickson, issued May 14, 1957, (oxyalkylated higher PEAs used to break petroleum emulsion); U.S. Patent 2,792,369 to Dickson, issued May 14, 1957 (oxyalkylated diethylene triamines used to break petroleum emulsions).

U.S. Patent 4,171,278 to Andree et al., issued October 16, 1979, discloses cold water detergent compositions containing a detergent surfactant (e.g. anionic) and a hydroxyalkyl amine in a weight ratio of 100:1 to 1:1. The amine can have the formula:

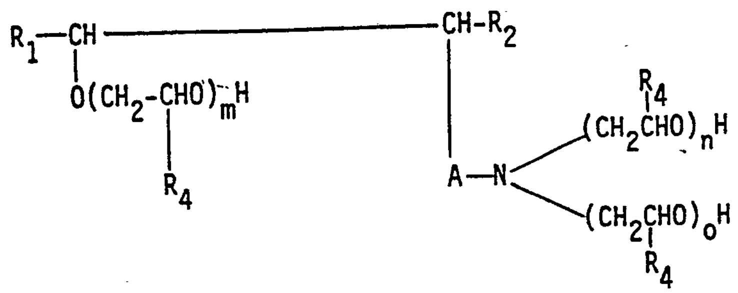

wherein $R_1$ is $C_1$—$C_{16}$ alkyl; $R_2$ is H or $C_1$—$C_{16}$ alkyl; $R_1 + R_2$ have 6—20 carbon atoms; $R_4$ is H or methyl; m, n, and o, are each 0 to 3 and A is bridging group such as

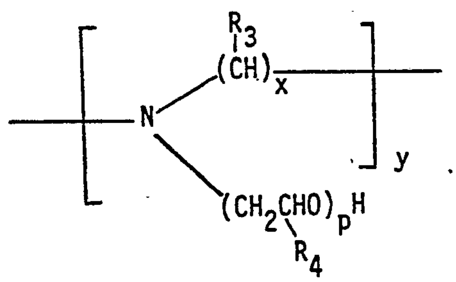

wherein $R_3$ is H or methyl; x is 2 to 6; y is 1 to 3; and p is 0 to 3; the sum of m to p being 1 to 5.5, and preferably 1 to 2. See also German Patent Document 2,165,900 to Henkel, published July 5, 1973, which discloses a washing agent for graying prevention formed by the reaction product of a PEI with an alkylglycidylether and ethylene oxide (2-hydroxyethyl moiety at each reactive site when ethoxylated).

U.S. Patent 3,838,057 to Barnes et al., issued September 24, 1974, discloses toilet bars containing ethoxylated quaternary ammonium compounds, including ethoxylated, quaternized PEIs taught to be

useful in the detergent, textile, and polymer industries, as anti-static and softening agents. These ethoxylated quaternized PEIs have the formula:

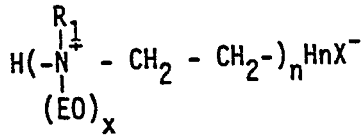

wherein $R_1$ is a compatible quaternary nitrogen substituent; n is at least 2; x is from 3 to 40; and $X^-$ is a compatible anion. Preferred compounds are those where $R_1$ is a $C_8$—$C_{22}$ alkyl group or the group:

$$R'COO(EO)_y—CH_2CHOHCH_2—$$

where R' is a $C_8$—$C_{22}$ alkyl grop and y is from 3 to 40. See also U.S. Patent 4,179,382 to Rudkin et al., issued December 18, 1979; U.S. Patent 4,152,272 to Young, issued May 1, 1979; and European Patent Application 2,085 to Rudkin et al., published May 30, 1979, which disclose ethoxylated quaternized polyamines having $C_{14}$ to $C_{24}$ alkyl or alkenyl groups attached to one of the nitrogen atoms useful as fabric softeners.

There are several patents which disclose detergent compositions, shampoo compositions and the like containing slightly ethoxylated PEIs (ethylene oxide:PEI weight ratio of 4:1 or less) to enhance the deposition and retention of particulate substances such as antimicrobials. See, for example, U.S. Patent 3,489,686 to Parran, issued January 13, 1970; U.S. Patent 3,580,853 to Parran, issued May 25, 1971; British Patent Specification 1,111,708 to Procter & Gamble published May 1, 1968, U.S. Patent 3,549,546 to Moore, issued December 22, 1970; and U.S. Patent 3,549,542 to Holderby, issued December 22, 1970.

## Disclosure of the Invention

The present invention relates to water-soluble ethoxylated amine polymers having clay soil removal/anti-redeposition properties useful in detergent compositions. These polymers comprise a polymer backbone other than a polyalkyleneamine backbone, at least 2 M groups and at least one L—X group, wherein M is a tertiary amine group attached to or integral with the backbone; X is a nonionic group, anionic group or mixture thereof; and L is a hydrophilic chain connecting groups M and X or connecting X to the backbone. L also contains the polyoxyalkylene moiety $—[(R'O)_m(CH_2CH_2O)_n]—$, wherein R' is $C_3$—$C_4$ alkylene or hydroxyalkylene, m and n are numbers such that the moiety $—(CH_2CH_2O)_n—$ comprises at least 50% by weight of said polyoxyalkylene moiety, and n is at least 3, except when the polymer backbone is a polyethyleneimine backbone, and n is at least 12 when the polymer backbone is a polyethyleneimine backbone.

The ethoxylated amine polymers of the present invention provide clay soil removal benefits while being anionic detergent surfactant compatible. At most wash pHs, it is believed nitrogen atoms of the polymer are protonated to form positively charged centers which, together with the remaining polar nitrogen atoms, cause adsorption of the polymer onto the negatively charged layers of the clay particle. It is also believed that the hydrophilic ethoxy units attached to the polymer backbone swell the clay particle so that it loses its cohesive character and is swept away in the wash water.

The anti-redeposition benefits provided by these ethoxylated amine polymers are also believed to be due to the positively charged centers which, together with the remaining polar nitrogen atoms, cause it to be absorbed onto soil suspended in the wash water. As more and more of these polymers adsorb onto the suspended soil, it becomes encased within a hydrophilic layer provided by the attached ethoxy units. As such, the hydrophilically encased soil is prevented from redepositing on fabrics, in particular hydrophobic fabrics such as polyester, during the laundering cycle.

## Ethoxylated Amine Polymers

The water-soluble ethoxylated amine polymers of the present invention comprise a polymer backbone other than a polyalkyleneamine backbone, and at least 2 M groups and at least one L—X group, wherein M is a tertiary amine group attached to or integral with the backbone; X is a nonionic group, an anionic group or mixture thereof; and L is a hydrophilic chain connecting groups M and X, or connecting X to the polymer backbone.

As used herein, the term "polymer backbone" refers to the polymeric moiety to which groups M and L—X are attached to or integral with. Included within this term are oligomer backbones (2 to 4 units), and true polymer backbones (5 or more units).

As used herein, the term "attached to" means that the group is pendent from the polymer backbone, examples of which are represented by the following general structures A and B:

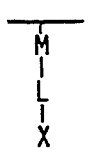
A

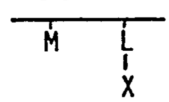
B

As used herein, the term "integral with" means that the group forms part of the polymer backbone, examples of which are represented by the following general structures C and D:

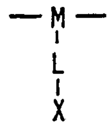 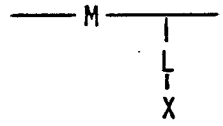

C D

Any polymer backbone (other than a polyalkyleneamine backbone) can be used as long as the ethoxylated amine polymer formed is water-soluble and has clay soil removal/anti-redeposition properties. Suitable polymer backbones can be derived from the polyurethanes, the polyesters, the polyethers, the polyamides, the polyimides, the polyacrylates, the polyacrylamides, the polyvinylethers, the polyethylenes, the polypropylenes and like polyalkylenes, the polystyrenes, the polyalkyleneimines, the polyvinylamines, the polyallylamines, the polydiallylamines, the polyvinylpyridines, the polyaminotriazoles, polyvinyl alcohol, the aminopolyureylenes and mixtures thereof.

As used herein, the term "polyalkyleneamine backbone" refers to polymer backbones having the following general formula:

$$[H_2N—]_w—[—R^1—N—]—_x—[—R^1—\underset{H}{N}—]—_y—[—R^1—NH_2]_z$$

wherein $R^1$ is $C_2$—$C_{12}$ alkylene, hydroxyalkylene, alkenylene, arylene or alkarylene, or a $C_2$—$C_3$ oxyalkylene moiety having from 2 to about 20 oxyalkylene units provided that no O—N or O—O bonds are formed; w is 1 or 0; x + y + z is from 2 to 9; and y + z is from 2 to 9. Such polymer backbones are particularly represented by the polyethyleneamines (PEAs) where $R^1$ is ethylene, and x + y + z is from 3 to 7. These PEAs can be obtained by reactions involving ammonia and ethylene dichloride, followed by fractional distillation. The common PEAs obtained are triethylenetetramine (TETA) and tetraethylenepentamine (TEPA). Above the pentamines, i.e., the hexamines, heptamines, octamines and possibly nonamines, the cogenerically derived mixture does not appear to separate by distillation and can include other materials such as cyclic amines and particularly piperazines. There can also be present cyclic amines with side chains in which nitrogen atoms appear. See U.S. Patent 2,792,372 to Dickson, issued May 14, 1957, which describes the preparation of PEAs.

As used herein, the term "polyalkyleneimine backbone" refers to a polymer backbone having the following general formula:

$$[H_2N]—\,—[R^1—N—]—_x—R^1—N—]—_y—[R^1NH_2]_z$$

wherein $R^1$ is defined as above; x + y + z is at least 10.

M can be any compatible tertiary amine group. The tertiary amine group can be represented by the following general structures E and F:

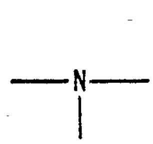 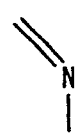

E F

Particularly preferred M groups are those represented by general structure E. The tertiary amine group M is also preferably positioned close to or integral with the polymer backbone.

In the preceding formula, X can be any compatible nonionic group, anionic group or mixture thereof. Suitable nonionic groups include $C_1$—$C_4$ alkyl or hydroxyalkyl, ester or ether groups, preferably acetate or methyl ether, respectively; hydrogen (H); or mixtures thereof. The particularly preferred nonionic group is H. With regard to anionic groups, $PO_3^{-2}$ and $SO_3^-$ are suitable. The particularly preferred anionic group is $SO_3^-$. It has been found that the relative percentage of anionic groups to nonionic groups can be important to the clay soil removal/anti-redeposition properties provided by the ethoxylated amine polymer. A mixture of from 0 to 30% anionic groups and from 70 to 100% nonionic groups provides preferred properties. A mixture of from 5 to 10% anionic groups and from 90 to 95% nonionic groups provides the most preferred properties. Usually, a mixture of from 0 to 80% anionic groups and from 20 to 100% nonionic groups provides suitable clay soil removal/anti-redeposition properties.

The ethoxylated amine polymers of the present invention normally have a ratio of groups M to groups X of 1:1. However, by appropriated copolymerization of tertiary amine, anionic (non-ionic) (i.e. containing the group L—X), or mixed tertiary amine/anionic (nonionic) monomers, the ratio of cationic groups M to groups X can be varied. The ratio of groups M to groups X can usually range from 2:1 to 1:10. In preferred

polymers, the ratio is from 1:1 to 1:5. The polymers formed from such copolymerization are typically random, i.e. the tertiary amine, anionic (nonionic), or mixed tertiary amine/anionic (nonionic) monomers copolymerize in a nonrepeating sequence.

The units which contain groups M and groups L—X most preferably comprise 100% of the ethoxylated amine polymers of the present invention. However, inclusion of other units (preferably nonionic) in the polymers is also permissible. Examples of other units include the acrylamides and the vinylethers. These other units can comprise from 0 to 90% of the polymer (from 10 to 100% of the polymer being units containing M and L—X groups). Typically, these other units comprise from 0 to 50% of the polymer (from 50 to 100% of the polymer being units containing M and L—X groups).

The number of groups M and L—X usually ranges from 2 to 200. Typically, the number of groups M and L—X is from 3 to 100. Preferably, the number of groups M and L—X is from 3 to 40.

Other than moieties for connecting groups M and X, or for attachment to the polymer backbone, hydrophilic chain L usually consists entirely of the polyoxyalkylene moiety $—[(R'O)_m—(CH_2CH_2O)_n]—$. The moieties $—(R'O)_m—$ and $—(CH_2CH_2O)_n—$ of the polyoxyalkylene moiety can be mixed together or preferably form blocks of $—(R'O)_m—$ and $—(CH_2CH_2O)_n—$ moieties. R' is preferably $C_3$ $C_6$ (propylene); m is preferably from 0 to 5, and most preferably 0, i.e. the polyoxyalkylene moiety consists entirely of the moiety $—(CH_2CH_2O)_n—$. The moiety $—(CH_2CH_2O)_n—$ preferably comprises at least 85% by weight of the polyoxyalkylene moiety, and most preferably 100% by weight (m is 0). For the moiety $—(CH_2CH_2O)_n—$, n is usually from 3 to 100. Typically n is from 12 to 42.

A plurality (2 or more) of moieties —L—X can also be hooked together and attached to group M or to the polymer backbone, examples of which are represented by the following general structures G and H:

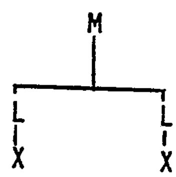
G

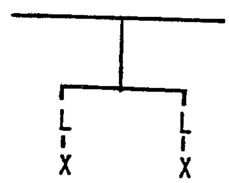
H

Structures G and H can be formed, for example, by reacting glycidol with group M or the polymer backbone, and then ethoxylating the subsequently formed hydroxy groups.

The level at which the ethoxylated amine polymers of the present invention can be present in the detergent compositions can vary widely depending upon the polymer used, the type of detergent formulation (liquid, granular), and the benefits desired. These compositions can be used as laundry detergents, laundry additives, or laundry pretreatments. Generally, these polymers can be included in an amount of from 0.05 to 95% by weight of the composition, with a usual range of from 0.1 to 10% by weight for laundry detergents. Preferred detergent compositions comprise from 0.5 to 5% by weight of the polymer of the present invention. For these preferred compositions, the polymer is typically present at from 1 to 3% by weight. The polymer is normally present at a level that provides from 2 ppm to 200 ppm, preferably from 10 ppm to 100 ppm, of the polymer in the wash solution at recommended U.S. usage levels, and normally from 30 ppm to 1000 ppm, preferably from 50 ppm to 500 ppm for European usage levels.

Representative classes of ethoxylated amine polymers of the present invention are as follows:

A. *Polyurethane, Polyester, Polyether, Polyamide*

One class of suitable ethoxylated amine polymers are derived from polyurethanes, polyesters, polyethers or polyamides. These polymers comprise units selected from those having formulas I, II and III:

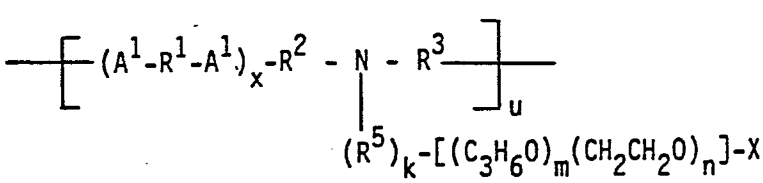
I

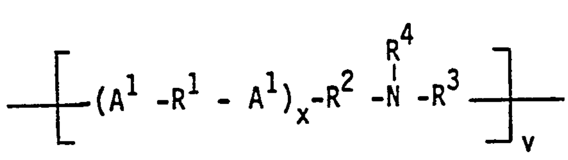
II

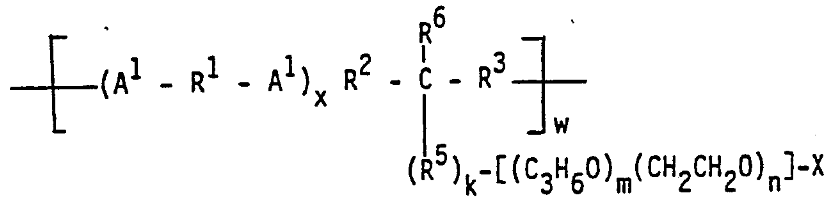

III

wherein $A^1$ is

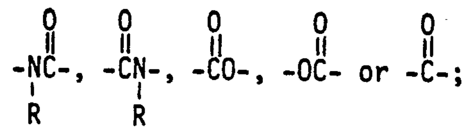

x is 0 or 1; R is H or $C_1$—$C_4$ alkyl or hydroxyalkyl; $R^1$ is $C_2$—$C_{12}$ alkylene, hydroxyalkylene, alkenylene, arylene or alkarylene, or a $C_2$—$C_3$ oxyalkylene moiety having from 2 to 20 oxyalkylene units, provided that no O—O or O—N bonds are formed with $A^1$; when x is 1, $R^2$ is —$R^5$— except when $A^1$ is

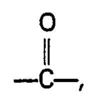

or is —$(OR^7)_y$— or —$OR^5$— provided that no O—O or N—O bonds are formed with $A^1$, and $R^3$ is —$R^5$— except when A is

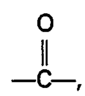

or is —$(R^7O)_y$— or —$R^5O$— provided that no O—O or O—N bonds are formed with $A^1$; when x is O, $R^2$ is —$(OR^7)_y$—, —$OR^5$—,

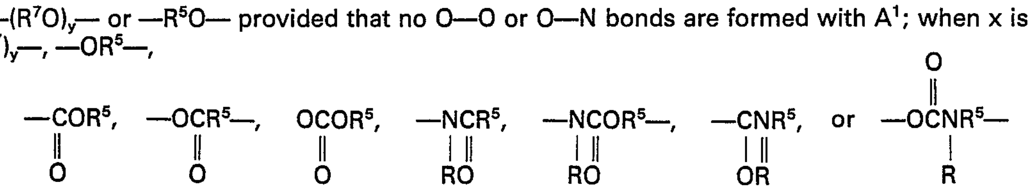

and $R^3$ is —$R^5$—; $R^4$ is $C_1$—$C_4$ alkyl or hydroxyalkyl; $R^5$ is $C_1$—$C_{12}$ alkylene, hydroxyalkylene, cycloalkylene, alkenylene, arylene, or alkarylene; $R^6$ is H or $R^4$; $R^7$ is $C_2$—$C_3$ alkylene or hydroxyalkylene; X is R, $SO_3^-$, or a mixture thereof; k is 0 or 1; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; y is from 2 to 20; the number of u + v and w are such that there are at least 2 N groups and at least 2 X groups.

In the above formulas, $A^1$ is preferably

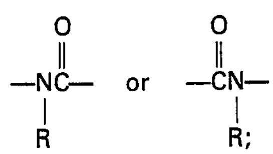

$A^2$ is preferably —O—; x is preferably 1; and R is preferably H. $R^1$ can be linear

(e.g. $-CH_2-CH_2-CH_2-$, 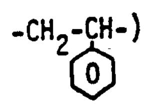)

or branched (e.g.

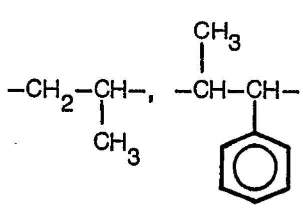

alkylene, hydroxyalkylene, alkenylene, cycloalkenylene, alkarylene or oxyalkylene; when $R^1$ is a $C_2$—$C_3$ oxyalkylene moiety, the number of oxyalkylene units is preferably from 2 to 12; $R^1$ is preferably $C_2$—$C_6$ alkylene or phenylene, and most preferably $C_2$—$C_6$ alkylene (ethylene, propylene, hexamethylene). $R^2$ is preferably —$OR^5$— or —$(OR^7)_y$; $R^3$ is preferably —$R^5O$— or —$(R^7O)_y$—; $R^4$ is preferably methyl. Like $R^1$, $R^5$ can be linear or branched, and is preferably $C_2$—$C_3$ alkylene; $R^6$ is preferably H or $C_1$—$C_3$ alkyl; $R^7$ is preferably ethylene; X is preferably H or methyl; k is preferably 0; m is preferably 0; r and s are each preferably 2; y is preferably from 2 to 12.

In the above formulas, n is preferably at least 6 when the number of N and X groups are each 2 or 3; n is most preferably at least 12, with a typical range of from 12 to 42 for all ranges of u + v + w. For homopolymers (v and w are 0), u is preferably from 3 to 40, and is most preferably from 3 to 20. For random copolymers (u is at least 1 or preferably 0), v and w are each preferably from 3 to 40.

B. *Polyacrylate, Polyacrylamide, Polyvinylether*

Another class of suitable ethoxylated amine polymers are derived from polyacrylates, polyacrylamides or polyvinylethers. These polymers comprise units selected from those having formulas IV, V and VI.

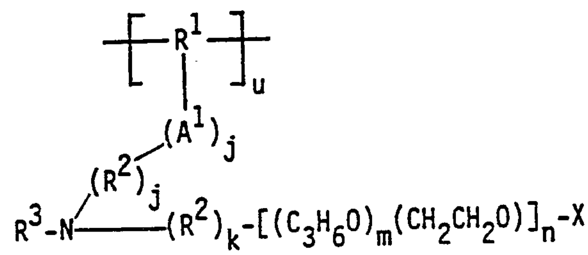

IV

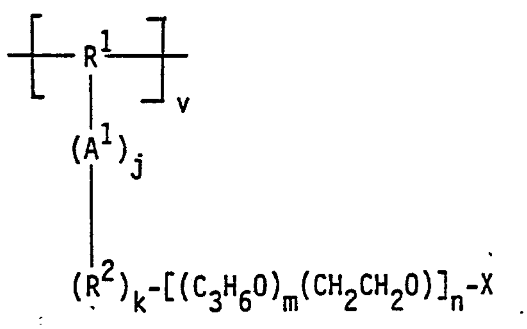

V

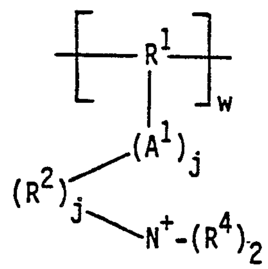

VI

wherein $A^1$ is

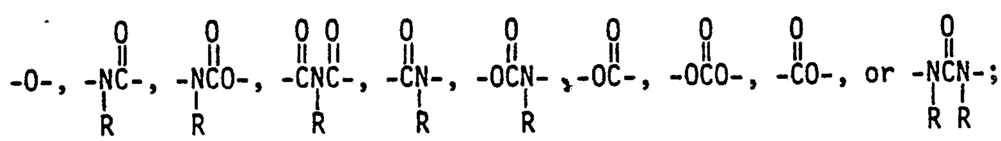

R is H or $C_1$—$C_4$ alkyl or hydroxyalkyl; $R^1$ is substituted $C_2$—$C_{12}$ alkylene, hydroxyalkylene, alkenylene, arylene, or alkarylene or $C_2$—$C_3$ oxyalkylene; each $R^2$ is $C_1$—$C_{12}$ alkylene, hydroxyalkylene, alkenylene, arylene or alkarylene; $R^3$ is $C_1$—$C_4$ alkyl or hydroxyalkyl, or the moiety —$(R^2)_k$—$[(C_3H_6O)_m(CH_2CH_2O)_n]$—X; each $R^4$ is $C_1$—$C_4$ alkyl or hydroxyalkyl, or together form the moiety —$(CH_2)_r$—$A^2$—$(CH_2)_s$—, wherein $A^2$ is —O— or —$CH_2$—; $R^5$ $C_2$—$C_3$ alkylene or hydroxyalkylene; X is R, $SO_3^-$, or a mixture thereof; j is 1 or 0; k is 1 or 0; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; r is 1 or 2, s is 1 or 2 and r + s is 3 or 4; the number u, v and w are such that there are at least 2 N groups and at least 2 X groups.

In the above formulas, $A^1$ is preferably

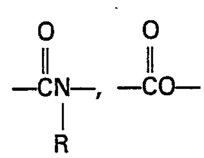

or —O—; $A^2$ is preferably —O—, R is preferably H. $R^1$ can be linear

(e.g.

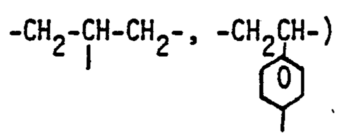

or branched (e.g.

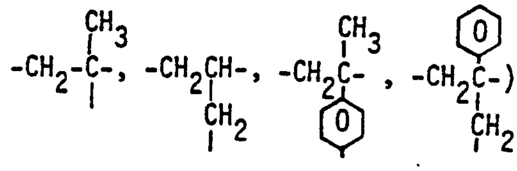

substituted alkylene, hydroxyalkylene, alkenylene, alkarylene or oxyalkylene; $R^1$ is preferably $C_2$—$C_6$ alkylene and most preferably

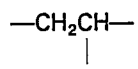 or 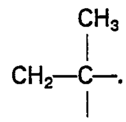

Each $R^2$ is preferably $C_2$—$C_3$ alkylene, $R^3$ is preferably methyl; each $R^4$ is preferably methyl; X is preferably H or methyl; j is preferably 1; k is preferably 0; m is preferably 0; r and s are each preferably 2.

In the above formulas, n, u, v and w can be varied according to the n, u, v and w for the polyurethane.

C. *Polyalkyleneimine*

Another class of suitable ethoxylated amine polymers are derived from polyalkyleneimines. These polymers have the general formula VII:

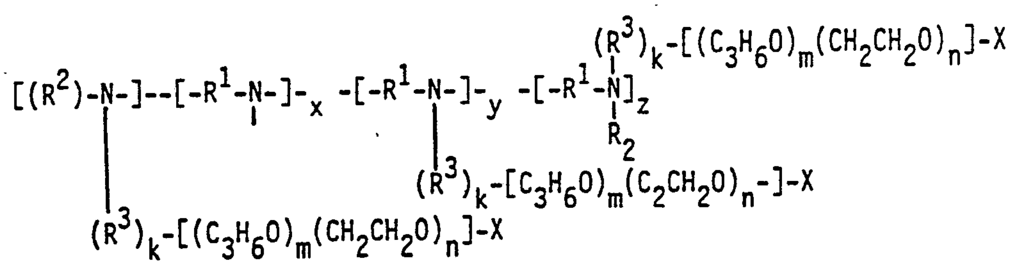

VII

wherein $R^1$ is $C_2$—$C_{12}$ alkylene, hydroxyalkylene, alkenylene, cycloalkylene, arylene or alkarylene, or a $C_2$—$C_3$ polyoxyalkylene moiety having from 2 to 20 oxyalkylene units; each $R^2$ is $C_1$—$C_4$ alkyl or hydroxyalkyl, the moiety $-(R^3)_k-[(C_3H_6O)_m(CH_2CH_2O)_n]-X$, or two $R^2$ together form the moiety $-(CH_2)_r-A-(CH_2)_s-$, wherein A is —O— or —$CH_2$—; $R^3$ is $C_1$—$C_{12}$ alkylene, hydroxyalkylene, alkenylene, arylene or alkarylene; X is H, $SO_3^-$, or mixture thereof; k is 1 or 0; m is from 0 to 5; n is at least 12; m and n are numbers such that the moiety $-(CH_2CH_2O)_n-$ comprises at least 85% by weight of the moiety $-[(C_3H_6O)_m(CH_2CH_2O)_n]-$; x + y + z is at least 10.

In the above formulas, A is preferably —O—; $R^1$ can be varied like $R^1$ of the polyurethane; $R^2$ is preferably methyl or the moiety $-(R^3)_k-[(C_3H_6O)_m(CH_2CH_2O)_n]-X$; each $R^3$ is preferably $C_2$—$C_3$ alkylene; X is preferably H; k is preferably 0; m is preferably 0; r and s are each preferably 2.

In the above formulas, n has a typical range of from 12 to 42 for all ranges of y + z.

Preferred ethoxylated amine polymers of this class are the ethoxylated $C_2$—$C_3$ polyalkyleneimines. Particularly preferred ethoxylated polyalkyleneimines are the ethoxylated ethyleneimines (PEIs). These preferred polymers have the general formula:

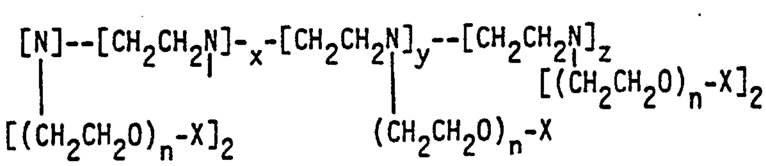

VIII

wherein X, x, y, z and n are defined as before.

The PEIs used in preparing the polymers of the present invention have a molecular weight of at least 440 prior to ethoxylation, which represents at least 10 units. Preferred PEIs used in preparing these compounds have a molecular weight of from 600 to 1800. The polymer backbone of these PEIs can be represented by the general formula:

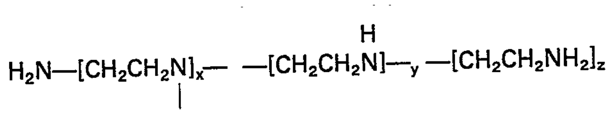

wherein the sum of x, y and z represents a number of sufficient magnitude to yield a polymer having the

molecular weights previously specified. Although linear polymer backbones are possible, branch chains can also occur. The relative proportions of primary, secondary and tertiary amine groups present in the polymer can vary, depending on the manner of preparation. The distribution of amine groups is typically as follows:

| | |
|---|---|
| $—CH_2CH_2—NH_2$ | 30% |
| $—CH_2CH_2—NH—$ | 40% |
| $—CH_2CH_2—N—$ (with a bond below N) | 30% |

Each hydrogen atom attached to each nitrogen atom of the PEI represents an active site for subsequent ethoxylation. These PEIs can be prepared, for example by polymerizing ethyleneimine in the presence of a catalyst such as carbon dioxide, sodium bisulfite, sulfuric acid, hydrogen peroxide, hydrochloric acid or acetic acid. Specific methods for preparing PEIs are disclosed in U.S. Patent 2,182,306 to Ulrich et al., issued December 5, 1939; U.S. Patent 3,033,746 to Mayle et al., issued May 8, 1962; U.S. Patent 2,208,095 to Esselmann et al., issued July 16, 1940; U.S. Patent 2,806,839 to Crowther, issued September 17, 1957; and U.S. Patent 2,553,696 to Wilson, issued May 21, 1951.

As defined in the preceding formulas, n is at least 12 for the ethoxylated PEIs. However, it should be noted that the minimum degree of the ethoxylation required for suitable clay soil removal/anti-redeposition performance can increase as the molecular weight of the PEI increases, especially much beyond 1800. Also, the degree of ethoxylation for preferred compounds increases as the molecular weight of the PEI increases. For PEIs having a molecular weight of at least 600, n is preferably at least 12, with a typical range of from 12 to 42. For PEIs having a molecular weight of at least 1800, n is preferably at least 24, with a typical range of from 24 to 42.

D. *Diallylamine Polymers*

Another class of suitable ethoxylated amine polymers are those derived from the diallylamines. These polymers comprise units selected from those having formulas IX and X:

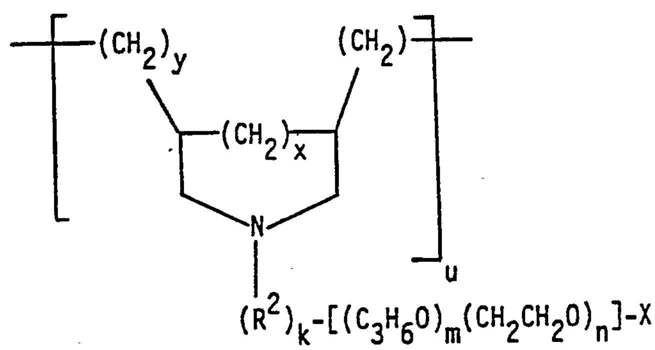

IX

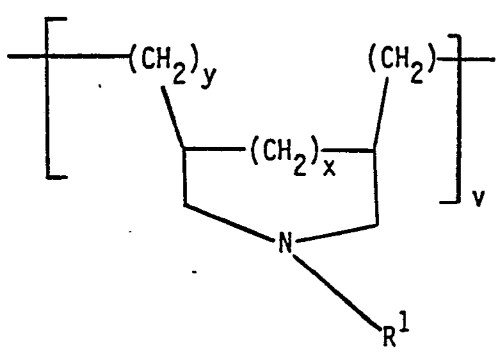

X

wherein $R^1$ is $C_1—C_4$ alkyl or hydroxyalkyl; $R^2$ is $C_1—C_{12}$ alkylene, hydroxyalkylene, alkylene, arylene or alkarylene; X is H, $SO_3^-$, or mixture thereof; k is 1 or 0; m is from 0 to 5; n is at least 3; m and n are numbers such that the moiety $—(CH_2CH_2O)_n—$ comprises at least 85% by weight of the moiety $—[(C_3H_6O)_m(CH_2CH_2O)_n—]$; x is 1 or 0; y is 1 when x is 0 and 0 when x is 1; the number of u and v is such that there are at least 2 N groups and at least 2 X groups.

In the above formulas, $R^1$ is preferably methyl; each $R^2$ is preferably $C_2—C_3$ alkylene; X is preferably H; k is preferably 0; m is preferably 0.

In the above formulas, n is preferably at least 6 when the number of N and X groups are each 2 or 3; n is most preferably at least 12, with a typical range of from 12 to 42 for all ranges of u + v. Preferably v is 0, and u is from 3 to 40.

Methods for Making Ethoxylated Amine Polymers

A. *Polyurethane*

The polyurethane versions of the present invention can be prepared according to the following general scheme:

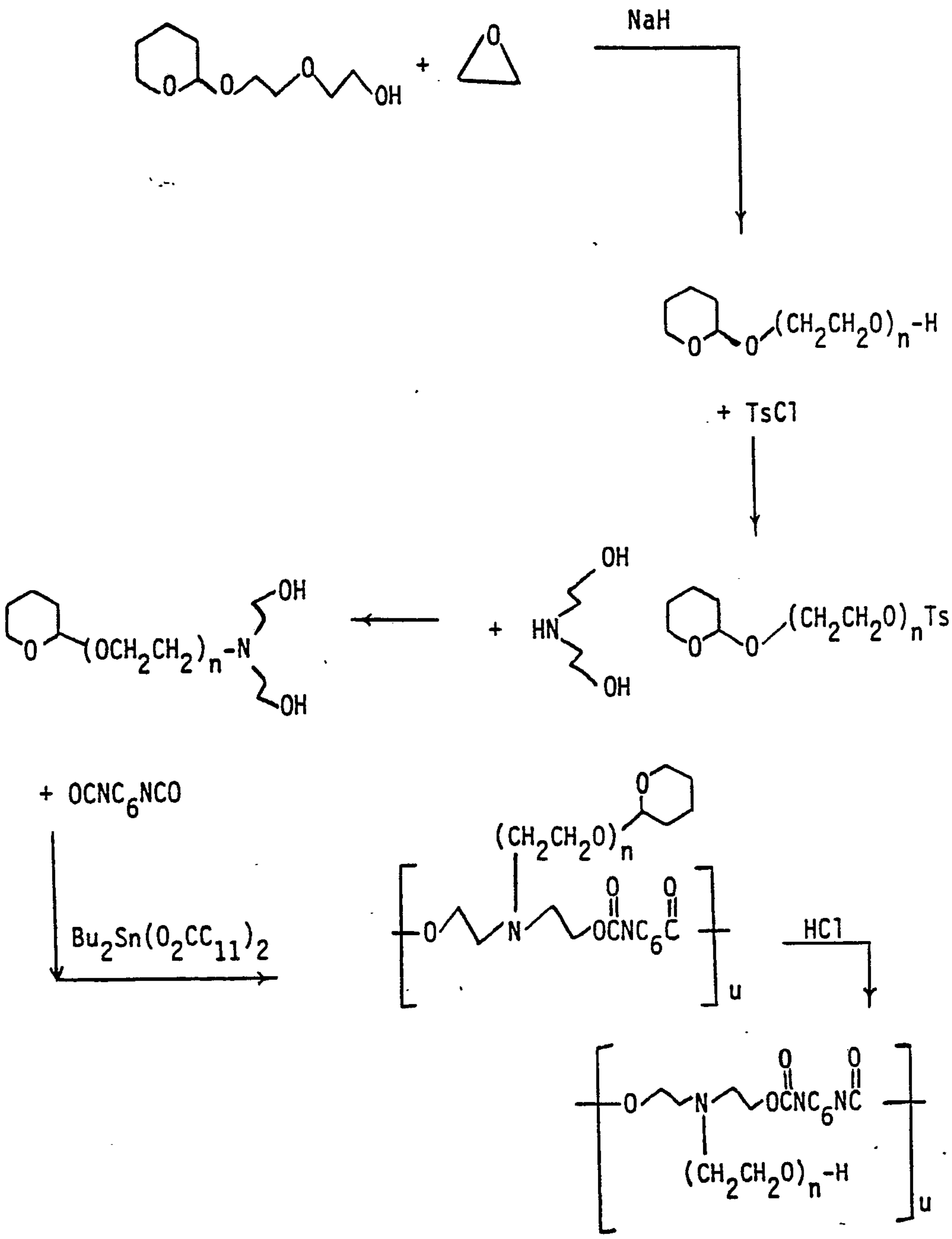


Step 1: Ethoxylation

The monotetrahydropyronyl ether of diethylene glycol (1.77 moles) [Compt. Rend., *260*, 1399—1401 (1965)] is ethoxylated using 5 mole% NaH to generate a catalytic amount of the corresponding alkoxide. Ethoxylation is conducted at 90°—120°C until 22 moles (n = 22) of ethylene oxide is taken up for each mole of the starting alcohol to form the ethoxylated compound.

Step 2: Tosylation

The ethoxylated compound from step 1 is dissolved in 1000 ml of acetonitrile and then cooled to 10°C. To this solution is added 2.6 moles of tosyl chloride dissolved in 500 ml of acetonitrile and cooled to 10°C and then 2.9 moles of triethylamine is added. After the reaction is complete, $H_2O$ is added to decompose the remaining tosyl chloride.

Step 3: Amination

To the reaction mixture from step 3 is added 3.4 moles of diethanolamine. After heating for 18 h at 80°C, the reaction mixture is cooled and carefully acidified with HCl, keeping the pH just above 7, and then extracted with ether. The aqueous phase is then extracted with a mixture of ether:acetonitrile (ratio of 5:2) twice. The aqueous phase is separated and then made basic with 50% NaOH. This aqueous phase is extracted with dichloromethane (2000 ml). The lower layer is separated and then extracted 3 times with 2000 ml portions of $\frac{1}{4}$ saturated NaCl solution while adding enough 50% NaOH to make the aqueous phase strongly basic (pH of 11). The lower organic layer is stripped to give the desired aminated compound. Toluene (200 ml) is added and the mixture stripped again to give the desired aminated monomer.

Step 4: Polymerization and Removal of Protecting Groups

The aminated monomer from step 3 is dissolved in chloroform free of ethanol stabilizer. The monomer is previously evacuated in a Kugelrohr at 80°—90°C under a vacuum (pressure of 133.3 Pa (1 mmHg) for at least 18 hours. The monomer in the chloroform is then dried overnight with 0.3 nm (3Å) molecular sieves and then transferred to a dry flask (equipped with mechanical stirrer) under argon. To the monomer is added dibutyltin dilaurate catalyst (0.058 mole equiv.) in chloroform under argon. To the stirred reaction mixture is then added 0.7 moles of hexamethylenediisocyanate per mole of aminated monomer over a 5 minute period. The reaction mixture is stirred at room temperature for 18 hours. The chloroform is removed under a vacuum at 70°C to give the resulting polymer. This polymer is dissolved in methanol, the pH is adjusted to 4 with aqueous HCl and is then allowed to stand overnight to solvolyze the tetrahydropyranyl protecting group. The solution is then neutralized with NaOH and stripped to give the crude polyurethane. This crude polyurethane is dissolved in chloroform and filtered to remove any salts. The chloroform is stripped away to give the desired, largely salt-free polymer.

B. *Random Copolymer of Ethoxylated Acrylate and an Amino Methacrylamide*

The random copolymer versions of the present invention can be prepared according to the following general scheme:

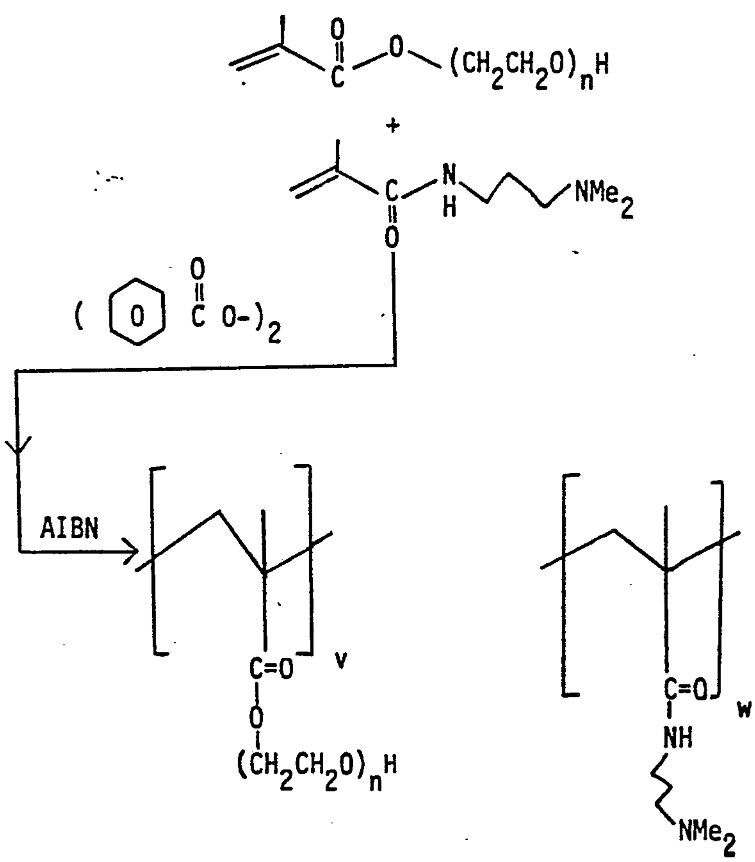

The synthesis of one such random copolymer is described as follows:

Decaethyleneglycol monomethacrylate monomer (0.008 moles) and N-(3-dimethylaminopropyl)-methacrylamide monomer (0.011 moles) are dissolved in 40 ml of acetonitrile. The reaction mixture is purged of oxygen by bubbling argon through it. A 0.23 g portion of benzoyl peroxide is separately dissolved in acetonitrile and similarly purged. The reaction mixture is heated to reflux and the benzoyl peroxide solution then added dropwise over 0.5 hours. Next, 0.28 g of azobisisobutyronitrile in 5 ml of acetonitrile is added to the reaction mixture and heating continued overnight. The desired random copolymer is isolated by stripping off the solvent.

C. *Ethoxylated PEI*

The ethoxylated PEIs of the present invention can be prepared by standard methods for ethoxylating amines. There is preferably an initial step of condensing sufficient ethylene oxide to provide 2-hydroxyethyl groups at each reactive site. The appropriate amount of ethylene oxide is then condensed with these 2-hydroxyethylamines using an alkali metal (e.g., sodium, potassium) hydride of hydroxide as the catalyst to provide the respective ethoxylated amines. The total degree of ethoxylation per reactive site (n) can be determined according to the following formula:

$$\text{Degree of Ethoxylation} = E/(A \times R)$$

wherein E is the total number of moles of ethylene oxide condensed (including hydroxyethylation), A is the number of moles of the starting PEI, and R is the number of reactive sites (typically 3 + y + z) for the starting PEI.

A representative synthesis of an ethoxylated PEI of the present invention is as follows:

Example 3

Dried PEI (M.W. 600, 14.19 g, 0.0236 moles) was hydroxyethylated with ethylene oxide at 130°—140°C for 3 hours with stirring. 0.5 g (0.0125 moles) of 60% sodium hydride in mineral oil was then added and the reaction mixture swept with argon.

Argon hydrogen evolution ceased, EO was then added under atmospheric pressure with stirring at 130°—140°C. After 14 hours, 711.6 g of EO had been added to give a calculated total degree of ethoxylation of 41.5. The ethoxylated PEI 600 obtained was a tan waxy solid.

D. *Diallylamine Polymers*

Diallylamine polymer versions of the present invention can be prepared according to the following general scheme.

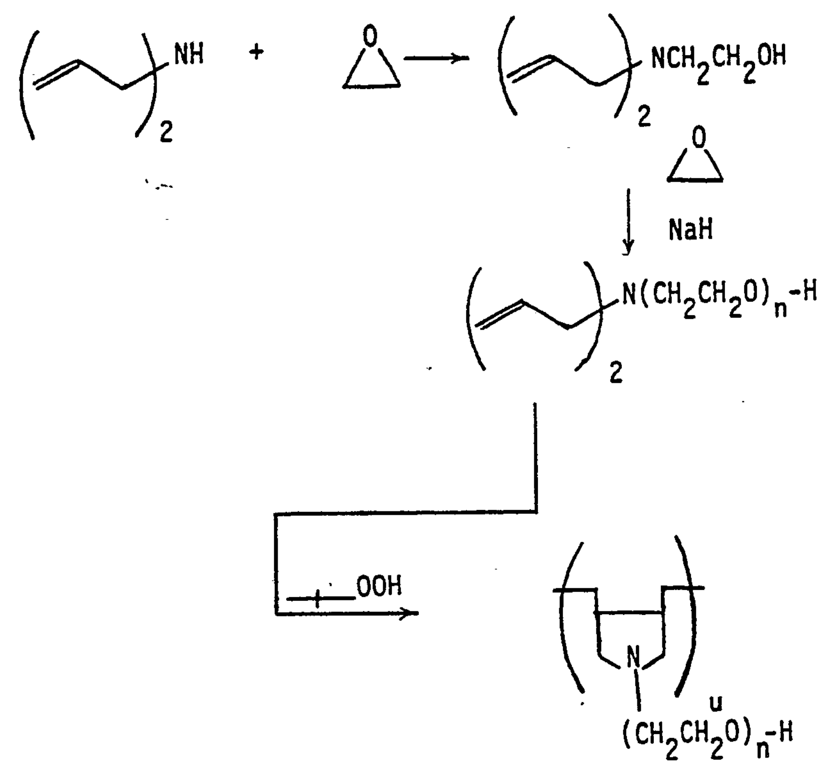


The synthesis of one such polymer is described as follows:

Example 4

Step 1: Ethoxylation

Diallylamine (1.7 moles) is dissolved in methanol (160 ml) under argon and then heated to 45°C. Ethylene oxide is then added for 2.5 hours. Methanol is then removed by heating the reaction mixture to 100°C *in vacuo.* To the residue is added sodium hydride (0.17 moles) with stirring until the evolution of hydrogen ceased. Ethylene oxide is then added until the degree of ethoxylation (n) is 7.

Step 2: Polymerization

A portion of the ethoxylated monomer from step 1 (25 g) is mixed with $D_2O$ (20 ml) and heated to 95°C under argon for 1 hour. Tertbutylhydroperoxide (0.5 ml) is then added dropwise and the reaction continued at 90°C for 18 hours. Then additional hydroperoxide (0.5 ml) is added dropwise. After heating 3 more days, water is then removed *in vacuo* (50°—60°C at pressure of 133.3 Pa (0.1 mmHg)) to yield the crude polymer.

Clay Soil Removal/Anti-Redeposition Properties of Various Ethoxylated Amine Polymers

A. *Experimental Method*

1. Clay Soil Removal

Clay soil removal comparisons were conducted in a standard 1 liter Tergotometer employing water of 7 grain hardness (3:1 $Ca^{++}$:$Mg^{++}$) and a temperature of 37.8°C (100°F). Soiled swatches were washed in the Tergotometer for 10 minutes and rinsed twice with water (7 grain hardness) at 23.9°C (70°F) for 2 minutes.

65% polyester/35% cotton blend fabric was used for the swatches. The swatches were 12.7 cm by 12.7 cm (5 inches by 5 inches) in size and were soiled by dipping in an aqueous slurry of local clay and subsequently baked to remove the water. The dipping and backing was repeated 5 times.

One wash employed 2000 ppm of a control liquid detergent composition containing the following surfactants:

| Surfactant | Amount (%) |
|---|---|
| Sodium $C_{14}$—$C_{15}$ alkyl ethoxysulfate | 10.8 |
| $C_{13}$ linear alkylbenzene sulfonic acid | 7.2 |
| $C_{12}$—$C_{13}$ alcohol polyethoxylate (6.5) | 6.5 |
| $C_{12}$ alkyl trimethylammonium chloride | 1.2 |

A second wash used the same detergent composition but also containing an ethoxylated amine polymer at 20 ppm. Neither composition contained optical brighteners. The product washes approximated a conventional home use laundry situation. After laundering, the swatches were dried in a mini-dryer.

The swatches were graded before and after washing on a Gardner Whiteness meter reading the L, a, and b coordinates. Whiteness (W) was calculated as:

$$W = \frac{7L^2-40Lb}{700}$$

The clay soil removal performance of each detergent composition was determined by finding the difference in whiteness (ΔW) before and after washing as:

$$\Delta W = W_{after} - W_{before}$$

The improvement in clay soil removal performance of the composition containing the ethoxylated amine polymer was measured as the difference in ΔW values ($\Delta^2W$) relative to the control composition.

2. Anti-Redeposition

Anti-redeposition comparisons were conducted in a 5 pot Automatic Miniwasher (AMW) employing 7 grain hardness water and temperature of 29.4°C (95°F). Test swatches were washed for 10 minutes and rinsed twice with water (7 grain hardness) at 23.9°C (75°F) for 2 minutes.

After the AMW pots were filled with 6 liters of water each, the detergent composition to be tested (control or containing 20 ppm ethoxylated amine polymer as in clay soil removal test) was added and agitated for 2 minutes. A background soil mixture (200 ppm artificial body soil, 100 ppm vacuum cleaner soil and 200 ppm clay soil) was then added and agitated for an additional 3 minutes. Three 12.7 cm (5 inch) square test swatches (50% polyester/50% cotton T-shirt material) were then added, along with two 80% cotton/20% polyester terry clothes and two 27.9 cm (11 inch) square swatches of 100% polyester knit fabric. The 10 minute wash cycle commenced at this point.

Following the rinse cycle, the test swatches were dried in a mini-dryer. Gardner Whiteness meter

readings (L, a and b) were then determined for the three test swatches. Anti-redeposition performance (ARD) was then calculated according to the following equation.

$$ARD = \frac{7L^2-40Lb}{700}$$

The ARD values for the three test swatches were then averaged. The improvement in anti-redeposition performance of the composition containing the ethoxylated amine was measured as the difference in ARD values (ΔARD) relative to the control composition.

B. Test Results

The results from testing the clay-soil removal and anti-redeposition performance of various ethoxylated amine polymers is shown in the following Table:

| Amine* Type | Amine M.W. | Degree of Ethoxylation | $\Delta^2W$ | ΔARD |
|---|---|---|---|---|
| PEI | 600 | 3 | 0.6 | 17.9 |
| | | 12 | 5.6 | 20.5 |
| | | 24 | 6.0 | 20.9 |
| | | 42 | 7.7 | 20.5 |
| PEI | 1800 | 5 | 1.6 | 14.4 |
| | | 13 | 3.1 | 17.7 |
| | | 29 | 5.5 | 16.6 |
| PPI | 20,000 | 6 | 0.6 | 5.0 |
| | | 24 | −1.3 | 11.6 |
| | | 42 | — | 13.8 |

PEI = polyethyleneimine, PPI = polypropyleneimine

For comparison, PEG 6000 (polyethylene glycol having M.W. of 6000) has a $\Delta^2W$ value of 4.9 and a ΔARD value of 8.9.

*Detergent Surfactants*

The amount of detergent surfactant included in the detergent compositions of the present invention can vary from 1 to 75% by weight of the composition depending upon the detergent surfactant(s) used, the type of composition to be formulated (e.g. granular, liquid) and the effects desired. Preferably, the detergent surfactant(s) comprises from 10 to 50% by weight of the composition. The detergent surfactant can be nonionic, anionic, ampholytic, zwitterionic, cationic, or a mixture thereof:

A. *Nonionic Surfactants*

Suitable nonionic surfactants for use in detergent compositions of the present invention are generally disclosed in U.S. Patent 3,929,678 to Laughlin et al., issued December 30, 1975 at column 13, line 14 through column 16, line 6. Classes of nonionic surfactants included are:

1. The polyethyleneoxide condensates of alkyl phenols. These compounds include the condensation products of alkyl phenols having an alkyl group containing from 6 to 12 carbon atoms in either a straight chain or branched chain configuration with ethylene oxide, the ethylene oxide being present in an amount equal to 5 to 25 moles of ethylene oxide per mole of alkyl phenol. The alkyl substituent in such compounds can be derived, for example, from polymerized propylene, diisobutylene. Examples of compounds of this type include nonyl phenol condensed with 9.5 moles of ethylene oxide per mole of nonyl phenol; dodecylphenol condensed with 12 moles of ethylene oxide per mole of phenol; dinonyl phenol condensed with 15 moles of ethylene oxide per mole of phenol; and diisooctyl phenol condensed with 15 moles of ethylene oxide per mole of phenol. Commercially available nonionic surfactants of this type include Igepal CO-630, marketed by the GAF Corporation, and Triton X-45, X-114, X-100, and X-102, all marketed by the Rohm & Haas Company.

2. The condensation products of aliphatic alcohols with from 1 to 25 moles of ethylene oxide. The alkyl chain of the aliphatic alcohol can either be straight or branched, primary or secondary, and generally contains from 8 to 22 carbon atoms. Examples of such ethoxylated alcohols include the condensation product of myristyl alcohol condensed with 10 moles of ethylene oxide per mole of alcohol; and the condensation product of 9 moles of ethylene oxide with coconut alcohol (a mixture of fatty alcohols with alkyl chains varying in length from 10 to 14 carbon atoms). Examples of commercially available nonionic surfactants of this type include Tergitol 15-S-9, marketed by Union Carbide Corporation, Neodol 45-9, Neodol 23-6,5, Neodol 45-7, and Neodol 45-4, marketed by Shell Chemical Company, and Kyro EOB, marketed by The Procter & Gamble Company.

3. The condensation products of ethylene oxide with a hydrophobic base formed by the condensation of propylene oxide with propylene glycol. The hydrophobic portion of these compounds has a molecular weight of from 1500 to 1800 and exhibits water insolubility. The addition of polyoxyethylene moieties to this hydrophobic portion tends to increase the water solubility of the molecule as a whole, and the liquid character of the product is retained up to the point where the polyoxyethylene content is 50% of the total weight of the condesnation product, which corresponds to condensation with up to 40 moles of ethylene oxide. Examples of compounds of this type include certain of the commercially available Pluronic surfactants, marketed by Wyandotte Chemical Corporation.

4. The condensation products of ethylene oxide with the product resulting from the reaction of propylene oxide and ethylenediamine. The hydrophobic moiety of these products consists of the reaction product of ethylenediamine and excess propylene oxide, the moiety having a molecular weight of from 2500 to 3000. This hydrophobic moiety is condensed with ethylene oxide to the extent that the condensation product contains from 40% to 80% by weight of polyoxyethylene and has a molecular weight of from 5,000 to 11,000. Examples of this type of nonionic surfactant include certain of the commercially available Tetronic compounds, marketed by Wyandotte Chemical Corporation.

5. Semi-polar nonionic detergent surfactants which include water-soluble amine oxides containing one alkyl moiety of from 10 to 18 carbon atoms and 2 moieties selected from the group consisting of alkyl groups and hydroxyalkyl groups containing from 1 to 3 carbon atoms; water-soluble phosphine oxides containing one alkyl moiety of from 10 to 18 carbon atoms and 2 moieties selected from the group consisting of alkyl groups and hydroxyalkyl groups containing from 1 to 3 carbon atoms; and water-soluble sulfoxides containing one alkyl moiety of from 10 to 18 carbon atoms and a moiety selected from the group consisting of alkyl and hydroxyalkyl moieties of from 1 to 3 carbon atoms.

Preferred semi-polar nonionic detergent surfactants are the amine oxide detergent surfactants having the formula

$$R^3(OR^4)_xN(\rightarrow O)R^5_2$$

wherein $R^3$ is an alkyl, hydroxyalkyl, or alkyl phenyl group or mixtures thereof containing from 8 to 22 carbon atoms; $R^4$ is an alkylene or hydroxyalkylene group containing from 2 to 3 carbon atoms or mixtures thereof; x is from 0 to 3; and each $R^5$ is an alkyl or hydroxyalkyl group containing from 1 to 3 carbon atoms or a polyethylene oxide group containing from one to 3 ethylene oxide groups. The $R^5$ groups can be attached to each other, e.g., through an oxygen or nitrogen atom to form a ring structure.

Preferred amine oxide detergent surfactants are $C_{10}$—$C_{18}$ alkyl dimethyl amine oxide and $C_8$—$C_{12}$ alkoxy ethyl dihydroxy ethyl amine oxide.

6. Alkylpolysaccharides disclosed in EP—A—0 070 074 (European Patent Application No. 82200868.6), filed July 12, 1982, R. A. Llenado, having a hydrophobic group containing from 6 to 30 carbon atoms, preferably from 10 to 16 carbon atoms and a polysaccharide, e.g., a polyglycoside, hydrophilic group containing from $1\frac{1}{2}$ to 10, preferably from $1\frac{1}{2}$ to 3, most preferably from 1.6 to 2.7 saccharide units. Any reducing saccharide containing 5 or 6 carbon atoms can be used, e.g. glucose, galactose and galactosyl moieties can be substituted for the glucosyl moieties. (Optionally the hydrophobic group is attached at the 2, 3, 4 positions thus giving a glucose or galactose as opposed to a glucoside or galactoside). The intersaccharide bonds can be, e.g., between the one position of the additional saccharide units and the 2-, 3-, 4-, and/or 6 positions on the preceding saccharide units.

Optionally, and less desirably, there can be a polyalkyleneoxide chain joining the hydrophobic moiety and the polysaccharide moiety. The preferred alkyleneoxide is ethylene oxide. Typical hydrophobic groups include alkyl groups, either saturated or unsaturated, branched or unbranched containing from 8 to 18, preferably from 10 to 16, carbon atoms. Preferably, the alkyl group is a straight chain saturated alkyl group. The alkyl group can contain up to 3 hydroxy groups and/or the polyalkyleneoxide chain can contain up to 10, preferably less than 5, most preferably 0, alkyleneoxide moieties. Suitable alkyl polysaccharides are octyl, nonyldecyl, undecyldodecyl, tridecyl, tetradecyl, pentadecyl, hexadecyl, heptadecyl, and octadecyl, di-, tri-, tetra-, penta-, and hexaglucosides, galactosides, lactosides, glucoses, fructosides, fructoses, and/or galactoses. Suitable mixtures include coconut alkyl, di-, tri-, tetra-, and pentaglucosides and tallow alkyl tetra-, penta-, and hexaglucosides.

The preferred alkylpolyglycosides have the formula

$$R^2O(C_nH_{2n}O)_t(\text{glycosyl})_x$$

wherein $R^2$ is selected from the group consisting of alkyl, alkylphenyl, hydroxyalkyl, hydroxyalkylphenyl, and mixtures thereof in which the alkyl groups contain from 10 to 18, preferably from 12 to 14, carbon atoms; n is 2 or 3, preferably 2; t is from 0 to 10, preferably 0; and x is from $1\frac{1}{2}$ to 10, preferably from $1\frac{1}{2}$ to 3, most preferably from 1.6 to 2.7. The glycosyl is preferably derived from glucose. To prepare these compounds, the alcohol or alkylpolyethoxy alcohol is formed first and then reacted with glucose, or a source of glucose, to form the glucoside (attachment at the 1-position). The additional glycosyl units can then be attached between their 1-position and the preceding glycosyl units 2-, 3-, 4- and/or 6-position, preferably predominantly the 2-position.

7. Fatty acid amide detergent surfactants having the formula:

$$R^6\text{—}\overset{\overset{\displaystyle O}{\|}}{C}\text{—}NR^7{}_2$$

wherein $R^6$ is an alkyl group containing from 7 to 21 (preferably from 9 to 17) carbon atoms and each $R^7$ is selected from the group consisting of hydrogen, $C_1$—$C_4$ alkyl, $C_1$—$C_4$ hydroxyalkyl, and —$(C_2H_4O)_xH$ where x varies from 1 to 3.

Preferred amides are $C_8$—$C_{20}$ ammonia amides, monoethanolamides, diethanolamides, and isopropanol amides.

B. *Anionic Surfactants*

Anionic surfactants suitable in detergent compositions of the present invnetion are generally disclosed in U.S. Patent 3,929,678 to Laughlin et al., issued December 30, 1975 at column 23, line 58 through column 29, line 23. Classes of anionic surfactants included are:

1. Ordinary alkali metal soaps such as the sodium, potassium, ammonium and alkylolammonium salts of higher fatty acids containing from 8 to 24 carbon atoms, preferably from 10 to 20 carbon atoms.

2. Water-soluble salts, preferably the alkali metal, ammonium and alkylolammonium salts, of organic sulfuric reaction products having in their molecular structure an alkyl group containing from 10 to 20 carbon atoms and a sulfonic acid or sulfuric acid ester group. (Included in the term "alkyl" is the alkyl portion of acyl groups).

Examples of this group of anionic surfactants are the sodium and potassium alkyl sulfates, especially those obtained by sulfating the higher alcohols ($C_8$—$C_{18}$ carbon atoms) such as those produced by reducing the glycerides of tallow or coconut oil; and the sodium and potassium alkylbenzene sulfonates in which the alkyl group contains from 9 to 15 carbon atoms, in straight chain or branched chain configuration, e.g., those of the type described in U.S. Patents 2,220,099 and 2,477,383. Especially valuable are linear straight chain alkylbenzene sulfonates in which the average number of carbon atoms in the alkyl group is from 11 to 13, abbreviated as $C_{11}$—$C_{13}$LAS.

Preferred anionic surfactants of this type are the alkyl polyethoxylate sulfates, particularly those in which the alkyl group contains from 10 to 22, preferably from 12 to 18 carbon atoms, and wherein the polyethoxylate chain contains from 1 to 15 ethoxylate moieties preferably from 1 to 3 ethoxylate moieties. These anionic detergent surfactants are particularly desirable for formulating heavy-duty liquid laundry detergent compositions.

Other anionic surfactants of this type include sodium alkyl glyceryl ether sulfonates, especially those ethers of higher alcohols derived from tallow and coconut oil; sodium coconut oil fatty acid monoglyceride sulfonates and sulfates; sodium or potassium salts of alkyl phenol ethylene oxide ether sulfates containing from 1 to 10 units of ethylene oxide per molecule and wherein the alkyl groups contain from 8 to 12 carbon atoms; and sodium or potassium salts of alkyl ethylene oxide ether sulfates containing 1 to 10 units of ethylene oxide per molecule and wherein the alkyl group contains from 10 to 20 carbon atoms.

Also included are water-soluble salts of esters of alpha-sulfonated fatty acids containing from 6 to 20 carbon atoms in the fatty acid group and from 1 to 10 carbon atoms in the ester group; water-soluble salts of 2-acyloxy-alkane-1-sulfonic acids containing from 2 to 9 carbon atoms in the acyl group and from 9 to 23 carbon atoms in the alkane moiety; alkyl ether sulfates containing from 10 to 20 carbon atoms in the alkyl group and from 1 to 30 moles of ethylene oxide; water-soluble salts of olefin sulfonates containing from 12 to 24 carbon atoms; and beta-alkyloxy alkane sulfonates containing from 1 to 3 carbon atoms in the alkyl group and from 8 to 20 carbon atoms in the alkane moiety.

3. Anionic phosphate surfactants.

4. N-alkyl substituted succinamates.

C. *Ampholytic Surfactants*

Ampholytic surfactants can be broadly described as aliphatic derivatives of secondary or tertiary amines, or aliphatic derivatives of heterocyclic secondary and tertiary amines in which the aliphatic radical

can be straight chain or branched and wherein one of the aliphatic substituents contains from 8 to 18 carbon atoms and at least one contains an anionic water-solubilizing group, e.g. carboxy, sulfonate, sulfate. See U.S. Patent 3,929,678 to Laughlin et al., issuêd December 30, 1975 at column 19, lines 18—35 for examples of ampholytic surfactants.

D. *Zwitterionic Surfactants*

Zwitterionic surfactants can be broadly described as derivatives of secondary and tertiary amines, or derivatives of heterocyclic secondary and tertiary amines, or derivatives of quaternary ammonium, quaternary phosphonium or tertiary sulfonium compounds. See U.S. Patent 3,929,678 to Laughlin et al., issued December 30, 1975 at column 19, line 38 through column 22, line 48 for examples of zwitterionic surfactants.

E. *Cationic Surfactants*

Cationic surfactants can also be included in detergent compositions of the present invention. Suitable cationic surfactants include the quaternary ammonium surfactants having the formula:

$$[R^2(OR^3)_y][R^4(OR^3)_y]_2R^5N^+X^-$$

wherein $R^2$ is an alkyl or alkyl benzyl group having from 8 to 18 carbon atoms in the alkyl chain; each $R^3$ is selected from the group consisting of $-CH_2CH_2-$, $-CH_2CH(CH_3)-$, $-CH_2CH(CH_2OH)-$, $-CH_2CH_2CH_2-$, and mixtures thereof; each $R^4$ is selected from the group consisting of $C_1$—$C_4$ alkyl, $C_1$—$C_4$ hydroxyalkyl, benzyl, ring structures formed by joining the two $R^4$ groups, $-CH_2CHOHCHOHCOR^6CHOHCH_2OH$ wherein $R^6$ is any hexose or hexose polymer having a molecular weight less than 1000, and hydrogen when y is not 0; $R^5$ is the same as $R^4$ or is an alkyl chain wherein the total number of carbon atoms of $R^2$ plus $R^5$ is not more than 18; each y is from 0 to 10 and the sum of the y values is from 0 to 15; and X is any compatible anion.

Preferred of the above are the alkyl quaternary ammonium surfactants, especially the mono-long chain alkyl surfactants described in the above formula when $R^5$ is selected from the same groups as $R^4$. The most preferred quaternary ammonium surfactants are the chloride, bromide and methylsulfate $C_8$—$C_{16}$ alkyl trimethylammonium salts, $C_8$—$C_{16}$ alkyl di(hydroxyethyl)methylammonium salts, the $C_8$—$C_{16}$ alkyl hydroxyethyldimethylammonium salts, and $C_8$—$C_{16}$ alkyloxypropyl trimethylammonium salts. Of the above, decyl trimethylammonium methylsulfate, lauryl trimethylammonium chloride, myristyl trimethylammonium bromide and coconut trimethylammonium chloride and methylsulfate are particularly preferred.

*Detergent Builders*

Detergent compositions of the present invention can optionally comprise inorganic or organic detergent builders to assist in mineral hardness control. These builders can comprise from 0 to 80% by weight of the composition. When included, these builders typically comprise up to 60% by weight of the detergent composition. Built liquid formulations preferably comprise from 10 to 25% detergent builder while built granular formulations preferably comprise from 10 to 50% by weight detergent builder.

Suitable detergent builders include crystalline aluminosilicate ion exchange materials having the formula:

$$Na_z[(AlO_2)_z\cdot(SiO_2)_y\cdot xH_2O$$

wherein z and y are at least 6, the mole ratio of z to y is from 1.0 to 0.5; and x is from 10 to 264.

Amorphous hydrated aluminosilicate materials useful herein have the empirical formula

$$M_z(zAlO_2\cdot ySiO_2)$$

wherein M is sodium, potassium, ammonium or substituted ammonium, z is from 0.5 to 2; and y is 1; this material having a magnesium ion exchange capacity of at least 50 milligram equivalents of $CaCO_3$ hardness per gram of anhydrous aluminosilicate.

The aluminosilicate ion exchange builder materials are in hydrated form and contain from 10% to 28% of water by weight if crystalline, and potentially even higher amounts of water if amorphous. Highly preferred crystalline aluminosilicate ion exchange materials contain from 18% to 22% water in their crystal matrix. The preferred crystalline aluminosilicate ion exchange materials are further characterized by a particle size diameter of from 0.1 µm to 10 µm. Amorphous materials are often smaller, e.g., down to less than 0.01 µm. More preferred ion exchange materials have a particle size diameter of from 0.2 µm to 4 µm. The term "particle size diameter" represents the average particle size diameter of a given ion exchange material as determined by conventional analytical techniques such as, for example, microscopic determination utilizing a scanning electron microscope. The crystalline aluminosilicate ion exchange materials are usually further characterized by their calcium ion exchange capacity, which is at least 200 mg equivalent of $CaCO_3$ water hardness/g of aluminosilicate, calculated on an anhydrous basis, and which

generally is in the range of from 300 mg eq./g to 352 mg eq./g. The aluminosilicate ion exchange materials are still further characterized by their calcium ion exchange rate which is at least 2 grains $C^{++}$/3.785 l (gallon)/minute/gram/3.785 l (gallon) of aluminosilicate (anhydrous basis), and generally lies within the range of from 2 grains/3.785 l (gallon)/minute/gram/3.785 l (gallon) to 6 grains/3.785 l (gallon)/minute/gram/3.785 l (gallon), based on calcium ion hardness. Optimum aluminosilicates for builder purposes exhibit a calcium ion exchange rate of at least 4 grains/3.785 l (gallon)/minute/gram/3.785 l (gallon).

The amorphous aluminosilicate ion exchange materials usually have a $Mg^{++}$ exchange capacity of at least 50 mg eq. $CaCO_3$/g (12 mg $Mg^{++}$/g) and a $Mg^{++}$ exchange rate of at least 1 grain/3.785 l (gallon)/minute/gram/3.785 l (gallon). Amorphous materials do not exhibit an observable diffraction pattern when examined by Cu radiation 0.154 nm (1.54 Angstrom Units).

Useful aluminosilicate ion exchange materials are commercially available. These aluminosilicates can be crystalline or amorphous in structure and can be naturally-occurring aluminosilicates or synthetically derived. A method for producing aluminosilicate ion exchange materials is disclosed in U.S. Patent 3,985,669 to Krummel, et al. issued October 12, 1976. Preferred synthetic crystalline aluminosilicate ion exchange materials useful herein are available under the designations Zeolite A, Zeolite P (B), and Zeolite X. In an especially preferred embodiment, the crystalline aluminosilicate ion exchange material has the formula

$$Na_{12}[(AlO_2)_{12}(SiO_2)_{12}]\cdot xH_2O$$

wherein x is from 20 to 30, especially 27.

Other examples of detergency builders include the various water-soluble, alkali metal, ammonium or substituted ammonium phosphates, polyphosphates, phosphonates, polyphosphonates, carbonates, silicates, borates, polyhydroxysulfonates, polyacetates, carboxylates, and polycarboxylates. Preferred are the alkali metal, especially sodium, salts of the above.

Specific examples of inorganic phosphate builders are sodium and potassium tripolyphosphate, pyrophosphate, polymeric metaphate having a degree of polymerization of from 6 to 21, and orthophosphate. Examples of polyphosphonate builders are the sodium and potassium salts of ethylene-1,1-diphosphonic acid, the sodium and potassium salts of ethane 1-hydroxy-1,1-diphosphonic acid and the sodium and potassium salts of ethane, 1,1,2-triphosphonic acid. Other phosphorus builder compounds are disclosed in U.S. Patents 3,159,581; 3,213,030; 3,422,021; 3,422,137; 3,400,176 and 3,400,148.

Examples of nonphosphorus, inorganic builders are sodium and potassium carbonate, bicarbonate, sesquicarbonate, tetraborate decahydrate, and silicate having a mole ratio of $SiO_2$ to alkali metal oxide of from 0.5 to 4.0, preferably from 1.0 to 2.4.

Useful water-soluble, nonphosphorus organic builders include the various alkali metal, ammonium and substituted ammonium polyacetates, carboxylates, polycarboxylates and polyhydroxysulfonates. Examples of polyacetate and polycarboxylate builders are the sodium, potassium lithium, ammonium and substituted ammonium salts of ethylenediamine tetracetic acid, nitrilotriacetic acid, oxydisuccinic acid, mellitic acid, benzene polycarboxylic acids, and citric acid.

Highly preferred polycarboxylate builders are disclosed in U.S. Patent No. 3,308,067 to Diehl, issued March 7, 1967. Such materials include the water-soluble salts of homo- and copolymers of aliphatic carboxylic acids such as maleic acid, itaconic acid, mesaconic acid, fumaric acid, aconitric acid, citraconic acid and methylenemalonic acid.

Other builders include the carboxylated carbohydrates disclosed in U.S. Patent 3,723,322 to Diehl issued March 28, 1973.

Other useful builders are sodium and potassium carboxymethyloxymalonate, carboxymethyloxysuccinate, cis-cyclohexanehexacarboxylate, cis-cyclopentanetetracarboxylate phloroglucinol trisulfonate, water-soluble polyacrylates (having molecular weights of from 2,000 to 200,000 for example), and the copolymers of maleic anhydride with vinyl methyl ether or ethylene.

Other suitable polycarboxylates are the polyacetal carboxylates disclosed in U.S. Patent 4,144,226, to Crutchfield et al. issued March 13, 1979, and U.S. Patent 4,246,495, to Crutchfield et al., issued March 27, 1979. These polyacetal carboxylates can be prepared by bringing together under polymerization conditions an ester of glyoxylic acid and a polymerization initiator. The resulting polyacetal carboxylate ester is then attached to chemically stable end groups to stabilize the polyacetal carboxylate against rapid depolymerization in alkaline solution, converted to the corresponding salt, and added to a surfactant.

Other useful detergency builder materials are the "seeded builder" compositions disclosed in Belgian Patent No. 798,856, issued October 29, 1973. Specific examples of such seeded builder mixtures are: 3:1 wt. mixtures of sodium carbonate and calcium carbonate having 5 μm particle diameter; 2.7:1 wt. mixtures of sodium sesquicarbonate and calcium carbonate having a particle diameter of 0.5 μm; 20:1 wt. mixtures of sodium sesquicarbonate and calcium hydroxide having a particle diameter of 0.01 μm; and a 3:3:1 wt. mixture of sodium carbonate, sodium aluminate and calcium oxide having a particle diameter of 5 μm.

*Other Optional Detergent Ingredients*

Other optional ingredients which can be included in detergent compositions of the present invention, in their conventional art-established levels for use (i.e., from 0 to 20%), include solvents, bleaching agents,

bleach activators, soil-suspending agents, corrosion inhibitors, dyes, fillers, optical brighteners, germicides, pH adjusting agents (monoethanolamine, sodium carbonate or sodium hydroxide), enzymes, enzyme-stabilizing agents, perfumes, fabric softening components or static control agents.

*Detergent Formulations*

Granular formulations embodying the detergent compositions of the present invention can be formed by conventional techniques, i.e., by slurrying the individual components in water and then atomizing and spray-drying the resultant mixture, or by pan or drum granulation of the ingredients. Granular formulations preferably comprise from 10 to 30% detergent surfactant, usually anionic.

Liquid formulations embodying the detergent compositions can be built or unbuilt. If unbuilt, these compositions conventionally contain 15 to 50% total surfactant, from 0 to 10% of an organic base such as a mono-, di-, or tri-alkanol amine, a neutralization system such as an alkali metal hydroxide and a lower primary alcohol such as ethanol or isopropanol, and 20 to 80% water. Such compositions are normally homogeneous single phase liquids of low viscosity (100 to 150 mPa.s at 23.9°C (centipoise at 75°F)).

Built liquid detergent compositions can be in the form of single phase liquids provided that the builder is solubilized in the mixture at its level of use. Such liquids conventionally contain 10 to 25% total surfactant, 10 to 25% builder which can be organic or inorganic, 3 to 10% of a hydrotrope system and 40 to 77% water. Liquids of this type also have a low viscosity (100 to 150 mPa.s at 23.9°C (centipoise at 75°F)). Built liquid detergents incorporating components that form heterogeneous mixtures (or levels of builder that cannot be completely dissolved) can also comprise detergent compositions of the present invention. Such liquids conventionally employ viscosity modifiers to produce systems having plastic shear characteristics to maintain stable dispersions and to prevent phase separation or solid settlement.

*Near Neutral Wash pH Detergent Formulations*

While the detergent compositions of the present invention are operative within a wide range of wash pHs (e.g. from 5 to 12), they are particularly suitable when formulated to provide a near neutral wash pH, i.e. an initial pH of from 6.0 to 8.5 at a concentration of from about 0.1 to 2% by weight in water at 20°C. Near neutral wash pH formulations are better for enzyme stability and for preventing stains from setting. In such formulations, the wash pH is preferably from 7.0 to 8.5, and more preferably from 7.5 to 8.0.

Preferred near neutral wash pH detergent formulations are disclosed in EP—A—0095205 (European Patent Application No. 83200688.6), filed on May 16, 1983, J. H. M. Wertz and P. C. E. Goffinet. These preferred formulations comprise:

(a) from 2 to 60% (preferably from 10 to 25%) by weight of an anionic synthetic surfactant as previously defined;

(b) from 0.25 to 12% (preferably from 1 to 4%) by weight of a cosurfactant selected from the group consisting of:

(i) quaternary ammonium surfactants having the formula:

$$[R^2(OR^3)_y][R^4(OR^3)_y]_2R^5N^+X^-$$

wherein $R^2$, each $R^3$, $R^4$, $R^5$, X and y are as previously defined; each y is from 0 to 10 and the sum of the y values is from 0 to 15; and X is any compatible anion;

(ii) diquaternary ammonium surfactants having the formula:

$$[R^2(OR^3)_y][R^4(OR^3)_y]_2N^+R^3N^+R^5[R^4(OR^3)_y]_2\ (X^-)_2$$

wherein $R^2$, $R^3$, $R^4$, y and X are as defined above; particularly preferred are the $C_8$—$C_{16}$ alkyl pentamethylethylenediamine chloride, bromide and methylsulfate salts;

(iii) amine surfactants having the formula:

$$[R^2(OR^3)_y][R^4(OR^3)_y]R^5N$$

wherein $R^2$, $R^3$, $R^4$, $R^5$ and y are as defined above; particularly preferred are the $C_{12}$—$C_{16}$ alkyl dimethyl amines;

(iv) diamine surfactants having the formula:

$$[R^2(OR^3)_y][R^4(OR^3)_y]NR^3NR^5[R^4(OR^3)_y]$$

wherein $R^2$, $R^3$, $R^4$, $R^5$ and y are as defined above; particularly preferred are the $C_{12}$—$C_{16}$ alkyl dimethyl diamines;

(v) amine oxide surfactants having the formula:

$$[R^2(OR^3)_y][R^4(OR^3)_y]R^5N{\rightarrow}O$$

wherein $R^2$, $R^3$, $R^4$, $R^5$ and y are as defined above; particularly preferred are the $C_{12}$—$C_{16}$ alkyldimethyl amine oxides; and

(vi) di(amine oxide) surfactants having the formula:

$$[R^2(OR^3)_y][R^4(OR^3)_y]\underset{\underset{O}{\downarrow}}{N}R^3\underset{\underset{O}{\downarrow}}{N}R^5[R^4(OR^3)_y]$$

wherein $R^2$, $R^3$, $R^4$, $R^5$ and y are as defined above; preferred are the $C_{12}$—$C_{16}$ alkyl trimethylethylene di(amine oxides) and

(c) from 5% to 40% by weight (preferably 7 to 30% by weight, and most preferably from 10 to 20% by weight) of a fatty acid containing from 10 to 22 carbon atoms (preferably a $C_{10}$—$C_{14}$ saturated fatty acid or mixture thereof); the mole ratio of the anionic surfactant to the cosurfactant being at least 1 and preferably from 2:1 to 20:1.

Such compositions also preferably contain from 3 to 15% by weight of an ethoxylated alcohol or ethoxylated alkyl phenol (nonionic surfactants) as previously defined. Highly preferred compositions of this type also preferably contain from 2 to 10% by weight of citric acid and minor amounts (e.g., less than 20% by weight) of neutralizing agents, buffering agents, phase regulants, hydrotropes, enzymes, enzyme stabilizing agents, polyacids, suds regulants, opacifiers, antioxidants, bactericides, dyes, perfumes and brighteners, such as those described in U.S. Patent 4,285,841 to Barrat et al., issued August 25, 1981.

## Specific Embodiments of Detergent Compositions According to the Present Invention

### Embodiment I

The following embodiments illustrate, but are not limiting of, detergent compositions of the present invention:

A granular detergent composition is as follows:

| Component | Wt. % |
|---|---|
| Polyurethane of Example 1 | 1.0 |
| Sodium $C_{14}$—$C_{15}$ alkylethoxysulfate | 10.7 |
| $C_{13}$ linear alkyl benzene sulfonic acid | 4.3 |
| $C_{12}$—$C_{14}$ alkylpolyethoxylate (6) | 0.5 |
| Sodium toluene sulfonate | 1.0 |
| Sodium tripolyphosphate | 32.9 |
| Sodium carbonate | 20.3 |
| Sodium silicate | 5.8 |
| Minors and water | Balance to 100 |

The components are added together with continuous mixing to form an aqueous slurry which is then spray dried to form the composition. Instead of the polyurethane, the random copolymer of Example 2, the PEI of Example 3 or the diallylamine polymer of Example 4 can be substituted therefor.

### Embodiment II

A liquid detergent composition is as follows:

| Component | Wt. % |
|---|---|
| Random Copolymer of Example 2 | 1.0 |
| Sodium $C_{14}$—$C_{15}$ alkyl polyethoxy (2.5) sulfate | 8.3 |
| $C_{12}$—$C_{14}$ alkyl dimethyl amine oxide | 3.3 |
| Sodium toluene sulfonate | 5.0 |
| Monoethanolamine | 2.3 |
| Sodium nitrilotriacetate | 18.2 |
| Minors and water | Balance to 100 |

The components are added together with continuous mixing to form the composition. Instead of the random copolymer, the polyurethane of Example 1, the PEI of Example 3 or the diallylamine polymer of Example 4 can be substituted therefor.

Embodiments III and IV

Liquid detergent compositions are as follows:

| Component | Wt. % III | Wt. % IV |
|---|---|---|
| PEI of Example 3 | 1.5 | 1.5 |
| $C_{14}$—$C_{15}$ alkylethoxysulfuric acid | 10.8 | — |
| $C_{14}$—$C_{15}$ alkylpolyethoxy (2.25) sulfuric acid | — | 10.8 |
| $C_{13}$ linear alkylbenzene sulfonic acid | 7.2 | 7.2 |
| $C_{12}$ alkyl trimethylammonium chloride | 1.2 | 1.2 |
| $C_{12-13}$ alcohol polyethoxylate (6.5) | 6.5 | 6.5 |
| Coconut fatty acid | 15.0 | 15.0 |
| Citric acid monohydrate | 6.9 | 4.0 |
| Diethylenetriamine pentaacetic acid | 0.9 | 0.9 |
| Protease enzyme | 0.8 | 0.8 |
| Amylase enzyme | 0.3 | 0.3 |
| Monoethanolamine | 13.6 | 2.0 |
| Triethanolamine | 3.0 | 4.0 |
| Sodium hydroxide | — | 2.0 |
| Potassium hydroxide | — | 2.8 |
| 1,2-Propanediol | 5.0 | 5.0 |
| Ethanol | 3.0 | 7.0 |
| Sodium formate | 1.0 | 1.0 |
| Sodium toluene sulfonate | 5.0 | — |
| Minors and water | Balance to 100 | |

Embodiment IV is prepared by adding the components together with continuous mixing, in the following order to produce a clear liquid: a paste premix of the the alkylbenzene sulfonic acid, 0.9 parts of the sodium hydroxide, propylene glycol, and 2.3 parts of the ethanol; a paste premix of the alkylpolyethoxysulfuric acid, 1.1 parts of the sodium hydroxide and 3.1 parts of the ethanol; alcohol polyethoxylate; premix of monoethanolamine, triethanolamine and brighteners, 1.5 parts potassium hydroxide; balance of the ethanol; citric acid; formate; 1.4 parts potassium hydroxide; fatty acid; pentaacetic acid; alkyl trimethylammonium chloride; adjust pH to 8.4 with potassium hydroxide, water or citric acid; enzymes; PEI (50% aqueous solution); and perfume. Embodiment III can be prepared in a similar manner.

Embodiment V

A liquid detergent composition is formulated as follows:

| Component | Wt. % |
|---|---|
| PEI of Example 3 | 1.0 |
| Sodium $C_{12}$ alkylpolyethoxy (3) sulfate | 12.6 |
| $C_{12}$—$C_{13}$ alcohol polyethoxylate (6.5) | 23.4 |
| Monoethanolamine | 2.0 |
| Ethanol | 9.0 |
| Citric acid monohydrate | 0.8 |
| Minors and water | Balance to 100 |

The components are added together with continuous mixing to form the composition. Instead of the PEI, the polyurethane of Example 1, the random copolymer of Example 2, or the diallylamine polymer of Example 4 can be substituted therefor.

**Claims**

1. A water-soluble ethoxylated amine polymer having clay soil removal/anti-redeposition properties which comprises a polymer backbone other than a polyalkyleneamine backbone, at least 2 M groups and at least one L—X group, wherein M is a tertiary amine group attached to or integral with said backbone; X is a nonionic group, anionic group or a mixture thereof; and L is a hydrophilic chain connecting groups M and X or connecting X to the backbone. L also contains the polyoxyalkylene moiety $-[(R'O)_m(CH_2CH_2O)_n]-$, wherein R′ is $C_3$—$C_4$ alkylene or hydroxyalkylene, m and n are numbers such that the moiety $-(CH_2CH_2O)_n-$ comprises at least 50% by weight of said polyoxyalkylene moiety, and n is at least 3, except when said backbone is a polyethyleneimine backbone, and n is at least 12 when said backbone is a polyethyleneimine backbone.

2. A polymer according to Claim 1 wherein said backbone is selected from the group consisting of the polyurethanes, the polyesters, the polyethers, the polyamides, the polyimides, the polyacrylates, the polyacrylamides, the polyvinylethers, the polyalkylenes, the polyalkarylenes, the polyalkyleneimines, the polyvinylamines, the polyallylamines, the polydiallylamines, the polyvinylpyridines, the polyaminotriazoles, polyvinyl alcohol, the aminopolyureylenes and mixtures thereof.

3. A polymer according to Claim 2 wherein the number of said M and L—X groups are each from 3 to 40.

4. A polymer according to Claim 3 wherein m and n are numbers such that the moiety $-(CH_2CH_2O)_n-$ comprises at least 85% by weight of said polyoxyalkylene moiety.

5. A polymer according to Claim 4 wherein m is 0 and n is at least 12.

6. A polymer according to Claim 5 wherein X is a mixture of from 0 to 30% anionic groups and from 70 to 100% nonionic groups.

7. A polymer according to Claim 6 wherein said anionic group is $SO_3^-$.

8. A polymer according to Claim 7 wherein said nonionic group is H.

9. A polymer according to Claim 1 which comprises units selected from those having formulas I, II and III:

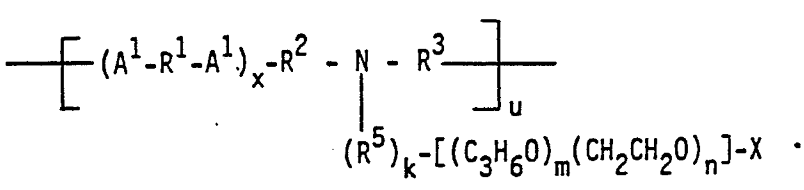

I

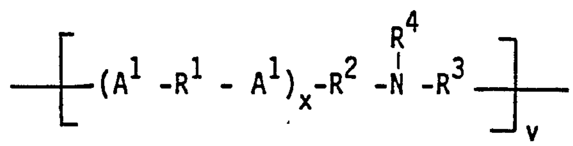

II

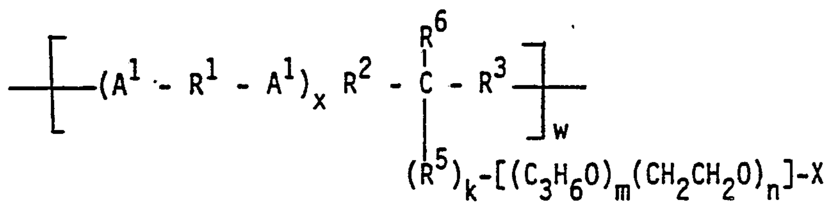

III

wherein $A^1$ is 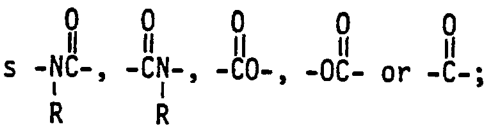

x is 0 or 1; R is H or $C_1$—$C_4$ alkyl or hydroxyalkyl; $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units, provided that no O—O or O—N bonds are formed with $A^1$; when x is 1, $R^2$ is —$R^5$— except when $A^1$ is

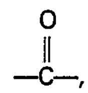

or is —$(OR^7)_y$— or —$OR^5$— provided that no O—O or N—O bonds are formed with $A^1$, and $R^3$ is —$R^5$— except when A is

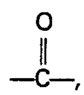

or is —$(OR^7)_y$— or —$R^5O$— provided that no O—O or N—O bonds are formed with $A^1$; when x is 0, $R^2$ is —$(OR^7)_y$—, —$OR^5$—,

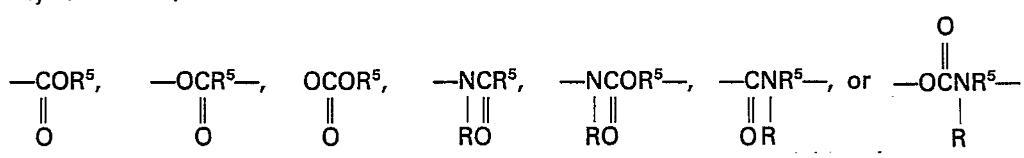

and $R^3$ is —$R^5$—; $R^4$ is $C_1$—$C_4$ alkyl or hydroxyalkyl; $R^5$ is $C_1$—$C_{12}$ alkylene, hydroxyalkylene, cycloalkylene, alkenylene, arylene, or alkarylene; $R^6$ is H or $R^4$; $R^7$ is $C_2$—$C_3$ alkylene or hydroxyalkylene; X is $R_r SO_3^-$, or a mixture thereof; k is 0 or 1; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; y is from 2 to 20; the number of u + v and w are such that there are at least 2 N groups and at least 2 X groups.

10. A polymer according to Claim 9 wherein $A^1$ is

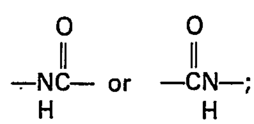

$R^1$ is $C_2$—$C_6$ alkylene; $R^2$ is —$OR^5$— or —$(OR^7{}_y$—; $R^3$ is —$R^5O$— or —$(R^7O)_y$—; $R^4$ is methyl; $R^6$ is H or $C_1$—$C_3$ alkyl; $R^7$ is ethylene; X is H or methyl; k is 0; y is from 2 to 12.

11. A polymer according to Claim 10 wherein v and w are 0 and u is from 3 to 40.

12. A polymer according to Claim 11 wherein m is 0 and n is at least 12.

13. A polymer according to Claim 1 which comprises units selected from those having formulas IV, V and VI.

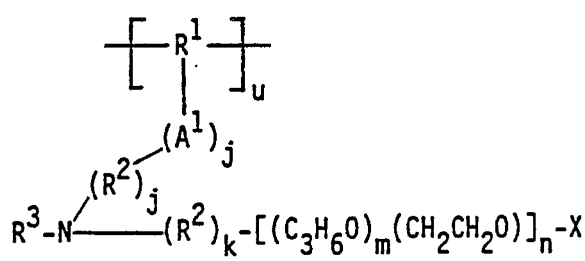

IV

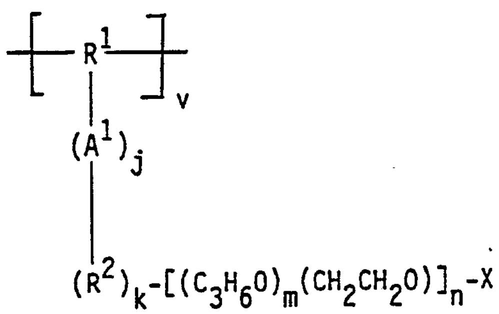

V

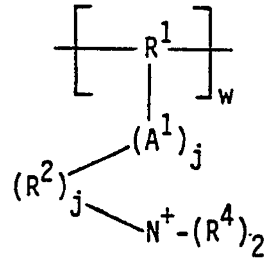

VI

wherein $A^1$ is

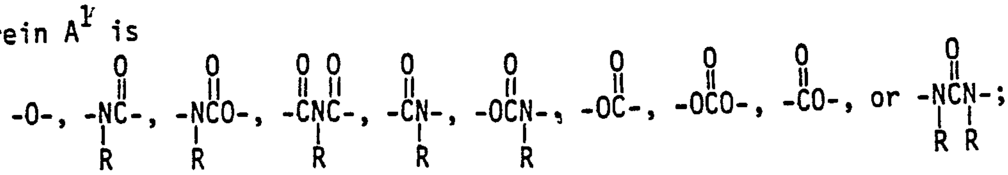

R is H or $C_1$—$C_4$ alkyl or hydroxyalkyl; $R^1$ is substituted $C_2$—$C_{12}$ alkylene, hydroxyalkylene, alkenylene, arylene, or alkarylene or $C_2$—$C_3$ oxyalkylene; each $R^2$ is $C_1$—$C_{12}$ alkylene, hydroxyalkylene, alkenylene, arylene or alkarylene; $R^3$ is $C_1$—$C_4$ alkyl or hydroxyalkyl, or the moiety —$(R^2)_k$—$[(C_3H_6O)_m(CH_2CH_2O)_n]$—X; each $R^4$ is $C_1$—$C_4$ alkyl or hydroxyalkyl, or together form the moiety —$(CH_2)_r$— $A_2$—$(CH_2)_s$—, wherein $A^2$ is —O— or —$CH_2$—; $R^5$ $C_2$—$C_3$ alkylene or hydroxyalkylene; X is R, $SO_3^-$, or a mixture thereof; j is 1 or 0; k is 1 or 0; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; r is 1 or 2, s is 1 or 2 and r + s is 3 or 4; the number u, v and w are such that there are at least 2 N groups and at least 2 X groups.

14. A polymer according to Claim 13 wherein $A^1$ is

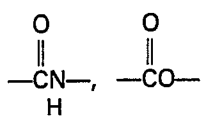 or —O—; $R^1$ is 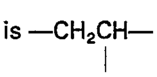 or 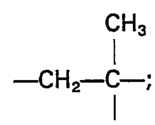;

$R^3$ is methyl; each $R^4$ is methyl; X is H or methyl; j is 1; k is 0.

15. A polymer according to Claim 14 wherein v and w are 0 and u is from 3 to 40.

16. A polymer according to Claim 15 wherein m is 0 and n is at least 12.

17. A polymer according to Claim 1 which comprises units selected from those having the general formula VII:

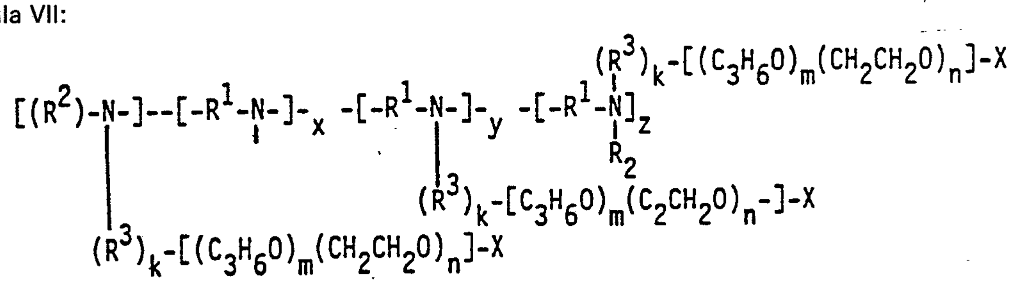

VII

wherein $R^1$ is $C_2$—$C_{12}$ alkylene, hydroxyalkylene, alkenylene, cycloalkylene, arylene or alkarylene, or a $C_2$—$C_3$ polyoxyalkylene moiety having from 2 to 20 oxyalkylene units; each $R^2$ is $C_1$—$C_4$ alkyl or hydroxyalkyl, the moiety —$(R^3)_k$—$[(C_3H_6O)_m(CH_2CH_2O)_n]$—X, or two $R^2$ together form the moiety —$(CH_2)_r$—A—$(CH_2)_s$—, wherein A is —O— or —$CH_2$—; $R^3$ is $C_1$—$C_{12}$ alkylene, hydroxyalkylene, alkenylene, arylene or alkarylene; X is H, $SO_3^-$, or mixture thereof; k is 1 or 0; m is from 0 to 5; n is at least 12; m and n are numbers such that the moiety —$(CH_2CH_2O)_n$— comprises at least 85% by weight of the moiety —$[(C_3H_6O)_m(CH_2CH_2O)_n]$—; x + y + z is at least 10.

18. A polymer according to Claim 17 wherein $R^1$ is $C_2$—$C_3$ alkylene; $R^2$ is methyl or the moiety —$[(C_3H_6O)_m(CH_2CH_2O)_n]$—X; X is H; k is 0.

19. A polymer according to Claim 18 wherein m is 0.

20. A polymer according to Claim 1 which comprises units selected from those having formulas IX and X:

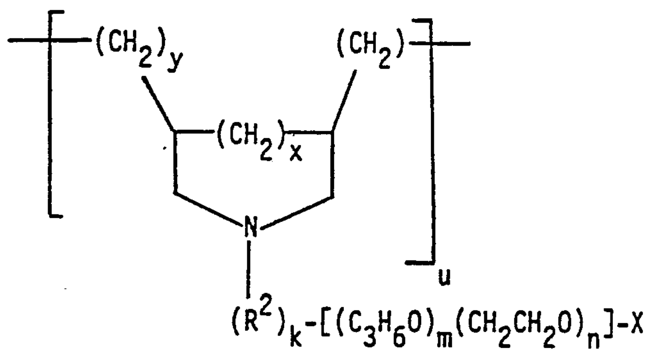

IX

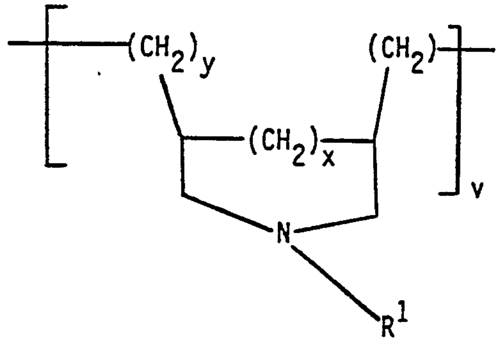

X

wherein $R^1$ is $C_1$—$C_4$ alkyl or hydroxyalkyl; $R^2$ is $C_1$—$C_{12}$ alkylene, hydroxyalkylene, alkylene, arylene or alkarylene; X is H, $SO_3^-$, or mixture thereof; k is 1 or 0, m is from 0 to 5; n is at least 3; m and n are numbers such that the moiety $—(CH_2CH_2O)_n—$ comprises at least 85% by weight of the moiety $—[(C_3H_6O)_m(CH_2CH_2O)_n—]$ x is 1 or 0; y is 1 when x is 0 and 0 when x is 1; the number of u and v is such that there are at least 2 N groups and at least 2 X groups.

21. A polymer according to Claim 20 wherein $R^1$ is methyl; $R^3$ is methyl; X is H; k is 0.

22. A polymer according to Claim 21 wherein v is 0 and u is from 3 to 40.

23. A polymer according to Claim 22 wherein m is 0 and n is at least 12.

24. A detergent composition, which comprises:

(a) from 1 to 75% by weight of a nonionic, anionic, ampholytic, zwitterionic or cationic detergent surfactant or mixture thereof; and

(b) from 0.05 to 95% by weight of an ethoxylated amine polymer having clay soil removal/anti-redeposition properties which comprises a polymer backbone other than a polyalkyleneamine or polyalkyleneimine backbone, at least 2 M groups and at least one L—X group, wherein M is a tertiary amine group attached to or integral with said backbone; X is a nonionic group, anionic group or mixture thereof; and L is a hydrophilic chain connecting groups M and X or connecting X to said backbone; L also containing the polyoxyalkylene moiety $—[(R'O)_m(CH_2CH_2O)_n]—$, wherein R' is $C_3$—$C_4$ alkylene or hydroxyalkylene, m and n are numbers such that the moiety $—(CH_2CH_2O)_n—$ comprises at least 50% by weight of said polyoxyalkylene moiety; and n is at least 3.

25. A composition according to Claim 24 wherein said backbone is selected from the group consisting of the polyurethanes, the polyesters, the polyethers, the polyamides, the polyimides, the polyacrylates, the polyacrylamides, the polyvinylethers, the polyalkylenes, the polyalkarylenes, the polyvinylamines, the polyallylamines, the polydiallylamines, the polyvinylpyridines, the polyaminotriazoles, polyvinyl alcohol, the aminopolyureylenes and mixtures thereof.

26. A composition according to Claim 25 wherein said polyoxyalkylene moiety consists entirely of the moiety $—(CH_2CH_2O)_n—$.

27. A composition according to Claim 26 wherein n is at least 12.

28. A composition according to Claim 27 wherein X is a mixture of from 0 to 30% anionic groups and from 70 to 100% nonionic groups.

29. A composition according to Claim 28 wherrein said nonionic group is H.

30. A composition according to Claim 29 wherein the number of M and L—X groups are each from 3 to 40.

31. A composition according to Claim 23 wherein said amine polymer comprises from 0.1 to 10% by weight of the composition.

32. A composition according to Claim 31 wherein said amine polymer comprises units selected from those having formulas I, II and III:

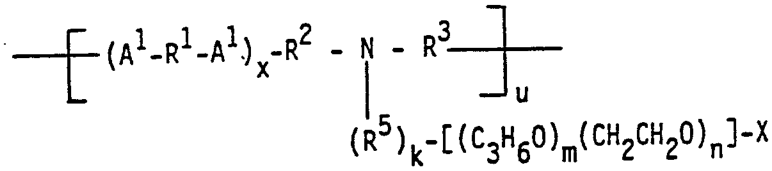

I

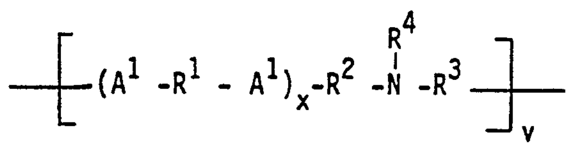

II

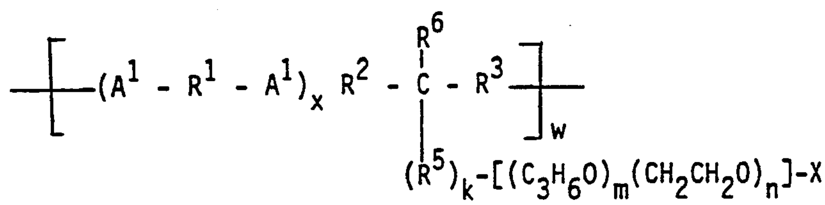

III

wherein $A^1$ is

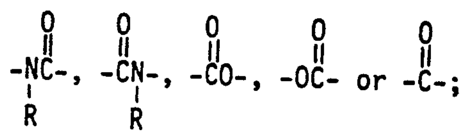

x is 0 or 1; R is H or $C_1$—$C_4$ alkyl or hydroxyalkyl; $R^1$ is $C_2$—$C_{12}$ alkylene, hydroxyalkylene, alkenylene, arylene or alkarylene, or a $C_2$—$C_3$ oxyalkylene moiety having from 2 to 20 oxyalkylene units, provided that no O—O or O—N bonds are formed with $A^1$; when x is 1, $R^2$ is —$R^5$— except when $A^1$ is

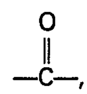

or is —$(OR^7)_y$— or —$OR^5$— provided that no O—O or N—O bonds are formed with $A^1$, and $R^3$ is —$R^5$— except when A is

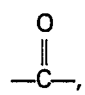

or is —$(R^7O)_y$— or —$R^5O$— provided that no O—O or O—N bonds are formed with $A^1$; when x is 0, $R^2$ is —$(OR^7)_y$—, —$OR^5$—,

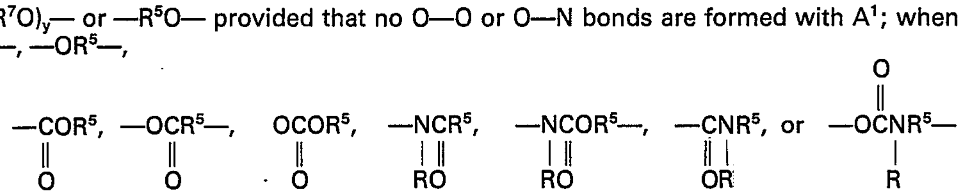

and $R^3$ is —$R^5$—; $R^4$ is $C_1$—$C_4$ alkyl or hydroxyalkyl; $R^5$ is $C_1$—$C_{12}$ alkylene, hydroxyalkylene, alkenylene, cycloalkylene, arylene, or alkarylene; $R^6$ is H or $R^4$; $R^7$ is $C_2$—$C_3$ alkylene or hydroxyalkylene; X is R, $SO_3^-$, or a mixture thereof; k is 0 or 1; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; y is from 2 to 20; the number of u + v and w are such that there are at least 2 N groups and at least 2 X groups.

33. A composition according to Claim 32 wherein $A^1$ is

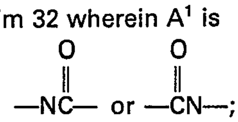

$R^1$ is $C_2$—$C_6$ alkylene; $R^2$ is —$OR^5$— or —$(OR^7)$—$_y$; $R^3$ is —$R^5O$— or $(R^7O)_y$—; $R^4$ is methyl; $R^5$ is $C_2$—$C_3$ alkylene; $R^6$ is H or $C_1$—$C_3$ alkyl; $R^7$ is ethylene; X is H or methyl; k is 0; y is from 2 to 12.

34. A composition according to Claim 33 wherein v and w are each 0 and u is from 3 to 40.

35. A composition according to Claim 34 wherein m is 0 and n is at least 12.

36. A composition according to Claim 31 wherein said amine polymer comprises units selected from those having formulas IV, V and VI:

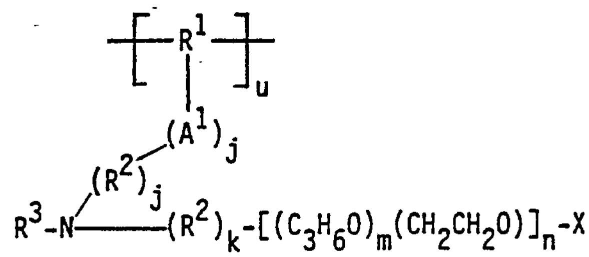

IV

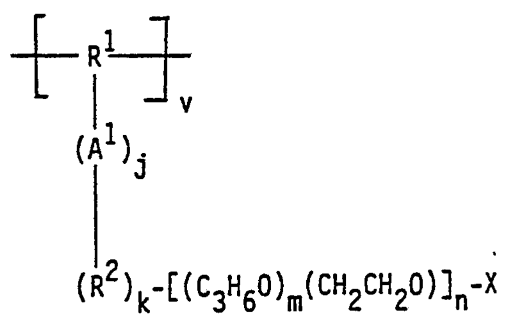

V

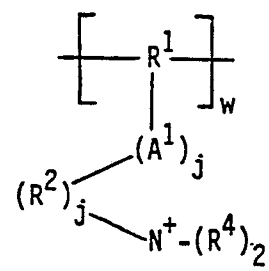

VI

wherein $A^1$ is

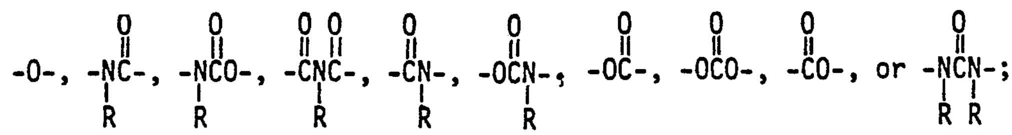

R is H or $C_1$—$C_4$ alkyl or hydroxyalkyl; $R^1$ is substituted $C_2$—$C_{12}$ alkylene, hydroxyalkylene, alkenylene, arylene, or alkarylene or $C_2$—$C_3$ oxyalkylene; each $R^2$ is $C_1$—$C_{12}$ alkylene, hydroxyalkylene, alkenylene, arylene or alkarylene; $R^3$ is $C_1$—$C_4$ alkyl or hydroxyalkyl, or the moiety —$(R^2)_k$—$[(C_3H_6O)_m(CH_2CH_2O)_n]$—X; each $R^4$ is $C_1$—$C_4$ alkyl or hydroxyalkyl, or together form the moiety —$(CH_2)_r$— $A^2$—$(CH_2)_s$—, wherein $A^2$ is —O— or —$CH_2$—; $R^5$ $C_2$—$C_3$ alkylene or hydroxyalkylene; X is R, $SO_3^-$, or a mixture thereof; j is 1 or 0; k is 1 or 0; m is from 0 to 5; n is at least 3; m and n are numbers such that the moiety —$(CH_2CH_2O)_n$— comprises at least 85% by weight of the moiety —$[(C_3H_6O)_m(CH_2CH_2O)_n]$—; r is 1 or 2, s is 1 or 2 and r + s is 3 or 4; the number u, v and w are such that there are at least 2 N groups and at least 2 X groups.

37. A composition according to Claim 36 wherein $A^1$ is

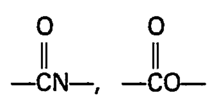

or —O—; $R^1$ is —$CH_2CH$— or

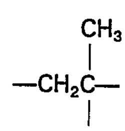

alkylene; $R^4$ is methyl; X is H or methyl; j is 1; k is 0.

38. A composition according to Claim 37 wherein v and w are each 0 and u is from 3 to 40.

39. A composition according to Claim 38 wherein m is 0 and n is at least 12.

40. A composition according to Claim 31 wherein said amine polymer comprises units selected from those having formulas VII and VIII:

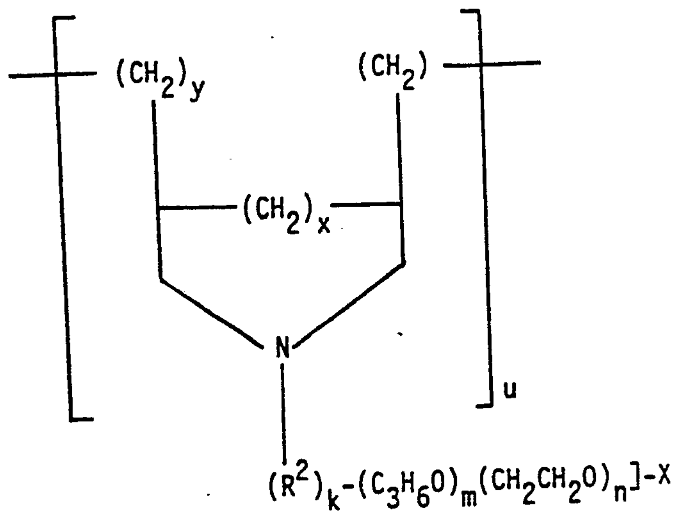

VII

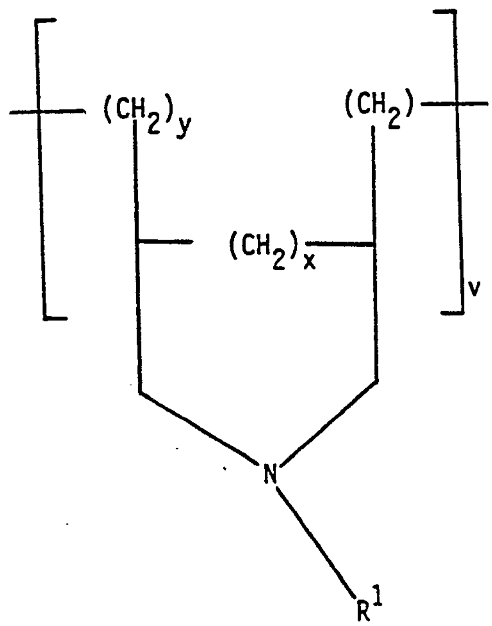

VIII

wherein $R^1$ is $C_1$—$C_4$ alkyl or hydroxyalkyl; $R^2$ is $C_1$—$C_{12}$ alkylene, hydroxyalkylene, alkylene, arylene or alkarylene; X is H, $SO_3^-$, or mixture thereof; k is 1 or 0; m is from 0 to 5; n is at least 3; m and n are numbers such that the moiety $-(CH_2CH_2O)_n-$ comprises at least 85% by weight of the moiety $-[(C_3H_6O)_m(CH_2CH_2O)_n-]$; x is 1 or 0; y is 1 when x is 0 and 0 when x is 1; the number of u and v is such that there are at least 2 N groups and at least 2 X groups.

41. A composition according to Claim 40 wherein $R^1$ is methyl; $R^3$ is methyl; X is H; k is 0.

42. A composition according to Claim 41 wherein v is 0 and u is from 3 to 40.

43. A composition according to Claim 42 wherein m is 0 and n is at least 12.

44. A composition according to Claim 31 wherein said detergent surfactant is selected from nonionic surfactants, anionic surfactants and mixtures thereof.

45. A composition according to Claim 44 further comprising from 0 to 80% by weight of a detergent builder.

**Patentansprüche**

1. Ein wasserlösliches, ethoxyliertes Aminpolymer mit Tonschmutzentfernungs/Antiwiederablagerungs-Eigenschaften, welches ein von einem Polyalkylenaminskelett verschiedenes Polymerskelett,

wenigstens 2 M-Gruppen und wenigstens eine L—X-Gruppe enthält, worin M eine tertiäre Amingruppe ist, die an das genannte Skelett gebunden oder in dieses eingebaut ist; X eine nichtionische Gruppe, eine anionische Gruppe, oder ein Gemisch davon, ist; und L eine hydrophile Kette, welche die M- und X-Gruppen verbindet, oder X mit dem Skelett verbindet, ist, wobei L auch den Polyoxyalkylenrest $—[(R'O)_m(CH_2CH_2O)_n]—$ enthält, wobei R' $C_3—C_4$-Alkylen oder Hydroxyalkylen ist, m und n solche Zahlen sind, daß der $—(CH_2CH_2O)_n$-Rest wenigstens 50 Gew.-% des genannten Polyoxyalkylenrestes ausmacht, und n wenigstens 3 ist, ausgenommen, wenn das genannte Skelett ein Polyethyleniminskelett ist, und n wenigstens 12 ist, wenn das genannte Skelett ein Polyethyleniminskelett ist.

2. Ein Polymer nach Anspruch 1, wobei das genannte Skelett aus der Gruppe ausgewählt ist, die aus den Polyurethanen, den Polyestern, den Polyethern, den Polyamiden, den Polyimiden, den Polyacrylaten, den Polyacrylamiden, den Polyvinylethern, den Polyalkylenen, den Polyalkarylenen, den Polyalkyleniminen, den Polyvinylaminen, den Polyallylaminen, den Polydiallylaminen, den Polyvinylpyridinen, den Polyaminotriazolen, Polyvinylalkohol, den Aminopolyureylenen, und Gemischen davon, besteht.

3. Ein Polymer nach Anspruch 2, wobei die Zahl der genannten M- und L—X-Gruppen jeweils 3 bis 40 beträgt.

4. Ein Polymer nach Anspruch 3, wobei m und n solche Zahlen sind, daß der $—(CH_2CH_2O)_n$-Rest wenigstens 85 Gew.-% des genannten Polyoxyalkylenrestes ausmacht.

5. Ein Polymer nach Anspruch 4, wobei m 0 ist, und n wenigstens 12 ist.

6. Ein Polymer nach Anspruch 5, wobei X ein Gemisch aus 0 bis 30% anionischen Gruppen und 70 bis 100% nichtionischen Gruppen ist.

7. Ein Polymer nach Anspruch 6, wobei die genannte anionische Gruppe $SO_3^-$ ist.

8. Ein Polymer nach Anspruch 7, wobei die genannte nichtionische Gruppe H ist.

9. Ein Polymer nach Anspruch 1, welches Einheiten enthält, die aus jenen der Formeln I, II und III:

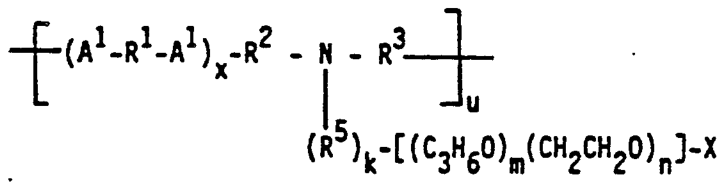

I

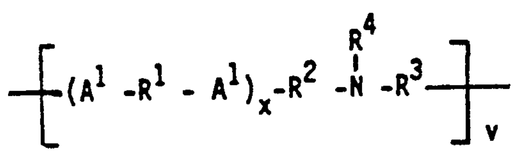

II

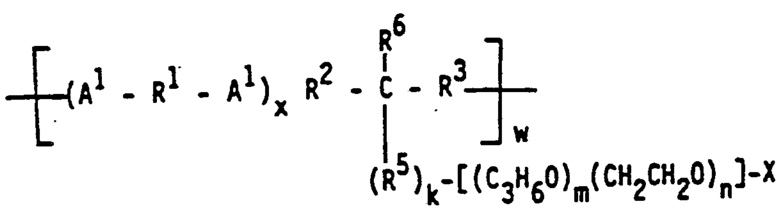

III

ausgewählt sind, worin $A^1$

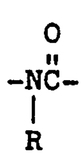, 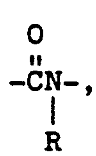, 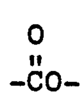, 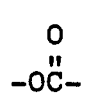 oder 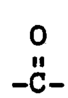 ist;

x 0 oder 1 ist; R H oder $C_1—C_4$-Alkyl oder Hydroxyalkyl ist; $R^1$ $C_1—C_{12}$-Alkylen, Hydroxyalkylen, Alkenylen, Cycloalkylen, Arylen oder Alkarylen, oder ein $C_2—C_3$-Oxyalkylenrest mit 2 bis 20 Oxyalkyleneinheiten ist, mit der Maßgabe, daß keine O—O- oder O—N-Bindungen mit $A^1$ gebildet sind; wenn x 1 ist, $R^2$ $—R^5—$ ist, ausgenommen, wenn $A^1$

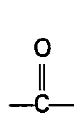

ist, oder —$(OR^7)_y$— oder —$OR^5$— ist, vorausgesetzt, daß keine O—O- oder N—O-Bindungen mit $A^1$ gebildet sind, und $R^3$ —$R^5$— ist, ausgenommen, wenn A

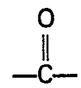

ist, oder —$(R^7O)_y$— oder —$R^5O$— ist vorausgesetzt, daß keine O—O- oder O—N-Bindungen mit $A^1$ gebildet sind; wenn x 0 ist, $R^2$ —$(OR^7)_y$—, —$OR^5$—,

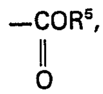 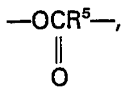 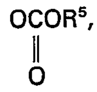 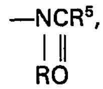 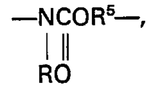 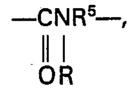 oder 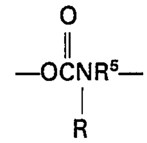

ist, und $R^3$ —$R^5$— ist; $R^4$ $C_1$—$C_4$-Alkyl oder Hydroxyalkyl ist; $R^5$ $C_1$—$C_{12}$-Alkylen, Hydroxyalkylen, Cycloalkylen, Alkenylen, Arylen oder Alkarylen ist; $R^6$ H oder $R^4$ ist; $R^7$ $C_2$—$C_3$-Alkylen oder Hydroxyalkylen ist; X R, $SO_3^-$, oder ein Gemisch davon, ist; k 0 oder 1 ist; m 0 bis 5 ist; n wenigstens 3 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; y 2 bis 20 ist; und der Zahlenwert von u + v und w derart ist, daß wenigstens 2 N-Gruppen und wenigstens 2 X-Gruppen vorliegen.

10. Ein Polymer nach Anspruch 9, wobei $A^1$

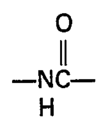 oder 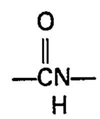

ist; $R^1$ $C_2$—$C_6$-Alkylen ist; $R^2$ —$OR^5$— oder —$(OR^7)_y$— ist; $R^3$ —$R^5O$— oder —$(R^7O)_y$— ist; $R^4$ Methyl ist; $R^6$ H oder $C_1$—$C_3$-Alkyl ist; $R^7$ Ethylen ist; X H oder Methyl ist; k 0 ist; und y 2 bis 12 ist.

11. Ein Polymer nach Anspruch 10, wobei v und w 0 sind, und u 3 bis 40 ist.

12. Ein Polymer nach Anspruch 11, wobei m 0 ist, und n wenigstens 12 ist.

13. Ein Polymer nach Anspruch 1, welches Einheiten enthält, die aus jenen der Formeln IV, V und VI:

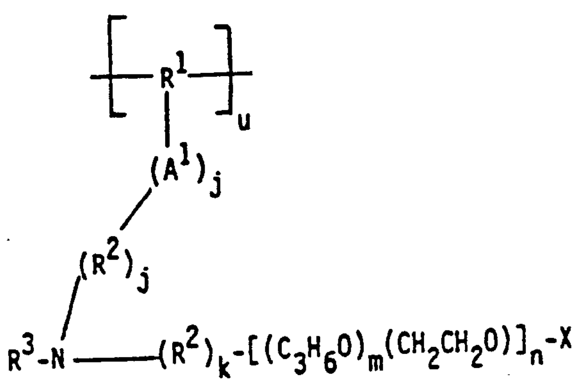

IV

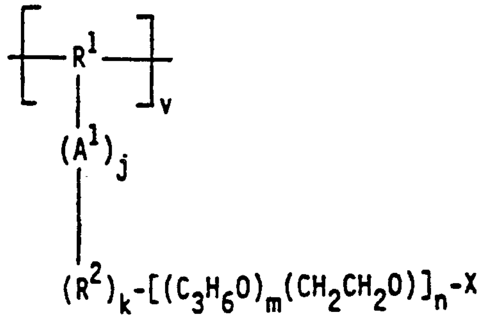

V

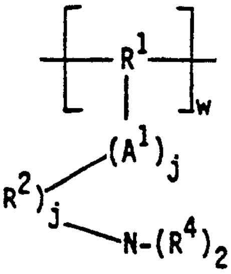

VI

ausgewählt sind, worin $A^1$

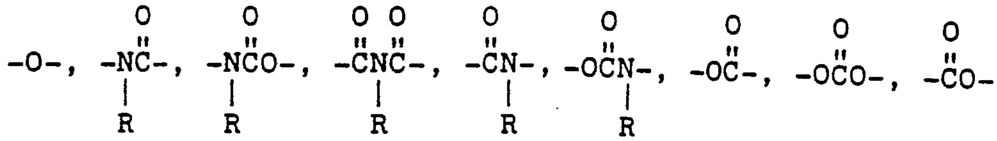

oder 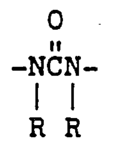 ist;

R H oder $C_1$—$C_4$-Alkyl oder Hydroxyalkyl ist; $R^1$ substituiertes $C_2$—$C_{12}$-Alkylen, Hydroxyalkylen, Alkenylen, Arylen oder Alkarylen, oder $C_2$—$C_3$-Oxyalkylen ist; jeder Rest $R^5$ $C_1$—$C_{12}$-Alkylen, Hydroxyalkylen, Alkenylen, Arylen oder Alkarylen ist; $R^3$ $C_1$—$C_4$-Alkyl oder Hydroxyalkyl, oder der Rest $—(R^2)_k—[(C_3H_6O)_m(CH_2CH_2O)_n]—X$ ist; jeder Rest $R^4$ $C_1$—$C_4$-Alkyl oder Hydroxyalkyl ist, oder zwei Reste $R^4$ gemeinsam den Rest $—(CH_2)_r—A^2—(CH_2)_s—$ bilden, worin $A^2$ —O— oder $—CH_2—$ ist; $R^5$ $C_2$—$C_3$-Alkylen oder Hydroxyalkylen ist; X R, $SO_3^-$, oder ein Gemisch davon, ist; j 1 oder 0 ist; k 1 oder 0 ist; m 0 bis 5 ist; n wenigstens 3 ist; m und n solche Zahlen sind, daß der Rest $—(CH_2CH_2O)_n—$ wenigstens 85 Gew.-% des Restes $—[(C_3H_6O)_m(CH_2CH_2O)_n]—$ ausmacht; r 1 oder 2 ist; s 1 oder 2 ist, und r + s 3 oder 4 ist; und der Zahlenwert von u, v und w ein solcher ist, daß wenigstens 2 N-Gruppen und wenigstens 2 X-Gruppen vorliegen.

14. Ein Polymer nach Anspruch 13, wobei $A^1$

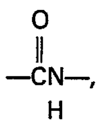, 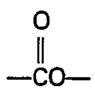 oder —O— ist; $R^1$ 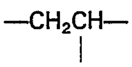 oder 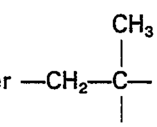 ist;

$R^3$ Methyl ist; jeder Rest $R^4$ Methyl ist; X H oder Methyl ist; j 1 ist; und k 0 ist.

15. Ein Polymer nach Anspruch 14, wobei v und w 0 sind und u 3 bis 40 ist.

16. Ein Polymer nach Anspruch 15, wobei m 0 ist, und n wenigstens 12 ist.

17. Ein Polymer nach Anspruch 1, welches Einheiten enthält, die aus jenen der allgemeinen Formel VII:

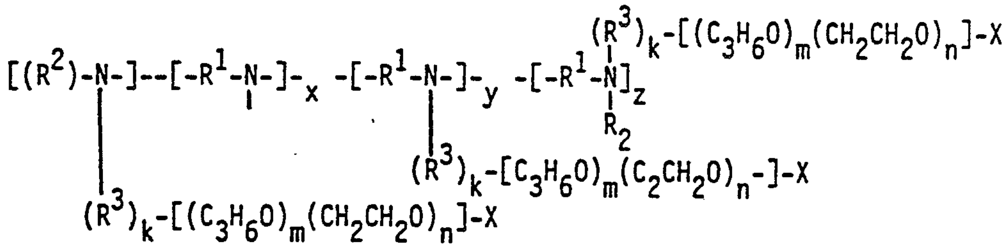

VII

ausgewählt sind, worin $R^1$ $C_2$—$C_{12}$-Alkylen, Hydroxyalkylen, Alkenylen, Cycloalkylen, Arylen oder Alkarylen, oder ein $C_2$—$C_3$-Polyoxyalkylenrest mit 2 bis 20 Oxyalkyleneinheiten ist; jeder Rest $R^2$ $C_1$—$C_4$-Alkyl oder Hydroxyalkyl, oder der Rest $—(R^3)_k—[(C_3H_6O)_m(CH_2CH_2O)_n]—X$ ist, oder zwei Reste $R^2$ gemeinsam den Rest $—(CH_2)_r—A—(CH_2)_s—$ bilden, wobei A —O— oder $—CH_2—$ ist; $R^3$ —$C_1$—$C_{12}$-Alkylen, Hydroxyalkylen, Alkenylen, Arylen oder Alkarylen ist; X H, $SO_3^-$, oder ein Gemisch davon, ist; k 1 oder 0 ist; m 0 bis 5 ist; n wenigstens 12 ist; m und n solche Zahlen sind, daß der Rest $—(CH_2CH_2O)_n—$ wenigstens 85 Gew.-% des Restes $—[(C_3H_6O)_m(CH_2CH_2O)_n]—$ ausmacht; und die Summe von x + y + z wenigstens 10 ist.

18. Ein Polymer nach Anspruch 17, wobei $R^1$ $C_2$—$C_3$-Alkylen ist; $R^2$ Methyl oder der Rest $—[(C_3H_6O)_m(CH_2CH_2O)_n]—X$ ist; X H ist; und k 0 ist.

19. Ein Polymer nach Anspruch 18, wobei m 0 ist.

20. Ein Polymer nach Anspruch 1, welches Einheiten enthält, die aus jenen der Formeln IX und X:

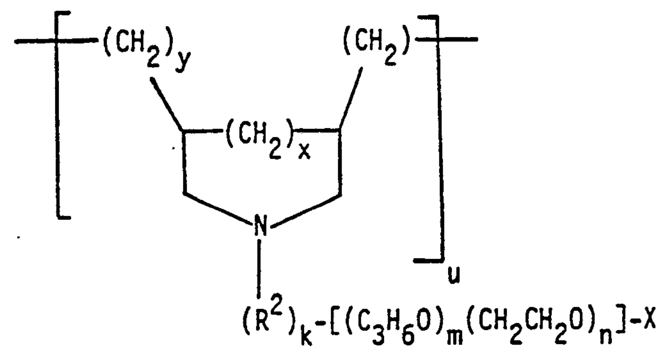

IX

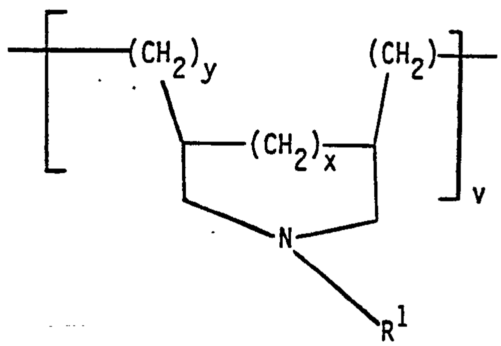

X

ausgewählt sind, worin $R^1$ $C_1$—$C_4$-Alkyl oder Hydroxyalkyl ist; $R^2$ $C_1$—$C_{12}$-Alkylen, Hydroxyalkylen, Cycloalkylen, Arylen oder Alkarylen ist; X H, $SO_3^-$, oder ein Gemisch davon, ist; k 1 oder 0 ist; m 0 bis 5 ist; n wenigstens 3 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; x 1 oder 0 ist; y 1 ist, wenn x 0 ist, und 0 ist, wenn x 1 ist; und der Zahlenwert von u und v ein solcher ist, daß wenigstens 2 N-Gruppen und wenigstens 2 X-Gruppen vorliegen.

21. Ein Polymer nach Anspruch 20, wobei $R^1$ Methyl ist; $R^3$ Methyl ist; X H ist; und k 0 ist.

22. Ein Polymer nach Anspruch 21, wobei v 0 ist, und u 3 bis 40 ist.

23. Ein Polymer nach Anspruch 22, wobei m 0 ist, und n wenigstens 12 ist.

24. Eine Detergenszusammensetzung, welche enthält:

(a) 1 bis 75 Gew.-% eines nichtionischen, anionischen, ampholytischen, zwitterionischen oder kationischen Detergensgrenzflächenaktiven Mittels, oder eines Gemisches Davon; und

(b) 0,05 bis 95 Gew.-% eines ethoxylierten Aminpolymers mit Tonschmutzentfernungs/Antiwiederabsetzungs-Eigenschaften, welches ein von einem Polyalkylenamin- oder Polyalkyleniminskelett verschiedenes Polymerskelett, wenigstens 2 M-Gruppen und wenigstens eine L—X-Gruppe umfaßt, worin M eine tertiäre Amingruppe ist, die an das genannte Skelett gebunden oder in dieses eingebaut ist; X eine nichtionische Gruppe, eine anionische Kette, oder ein Gemisch davon, ist; und L eine hydrophile Gruppe ist, die die M- und X-Gruppen verbindet, oder X mit dem Skelett verbindet; wobei L auch den Polyoxyalkylenrest —$[(R'O)_m(CH_2CH_2O)_n]$— enthält, worin R' $C_3$—$C_4$-Alkylen oder Hydroxyalkylen ist, m und n solche Zahlen sind, daß der —$(CH_2CH_2O)_n$-Rest wenigstens 50 Gew.-% des genannten Polyoxyalkylenrestes ausmacht; und n wenigstens 3 ist.

25. Eine Zusammensetzung nach Anspruch 24, wobei das genannte Skelett aus der Gruppe ausgewählt ist, die aus den Polyurethanen, den Polyestern, den Polyethern, den Polyamiden, den Polyimiden, den Polyacrylaten, den Polyacrylamiden, den Polyvinylethern, den Polyalkylenen, den Polyalkarylenen, den Polyvinylaminen, den Polyallylaminen, den Polydiallylaminen, den Polyvinylpyridinen, den Polyaminotriazolen, Polyvinylalkohol, den Aminopolyureylenen, und Gemischen davon, besteht.

26. Eine Zusammensetzung nach Anspruch 25, wobei der genannte Polyoxyalkylenrest zur Gänze aus dem —$(CH_2CH_2O)_n$-Rest besteht.

27. Eine Zusammensetzung nach Anspruch 26, wobei n wenigstens 12 ist.

28. Eine Zusammensetzung nach Anspruch 27, wobei X ein Gemisch aus 0 bis 30% anionischen Gruppen und aus 70 bis 100% nichtionischen Gruppen ist.

29. Eine Zusammensetzung nach Anspruch 28, wobei die genannte nichtionische Gruppe H ist.

30. Eine Zusammensetzung nach Anspruch 29, wobei die Anzahl von M- und L—X-Gruppen jeweils 3 bis 40 beträgt.

31. Eine Zusammensetzung nach Anspruch 23, wobei das genannte Aminpolymer 0,1 bis 10 Gew.-% der Zusammensetzung ausmacht.

32. Eine Zusammensetzung nach Anspruch 31, wobei das genannte Aminpolymer Einheiten enthält, die aus solchen der Formeln I, II und III:

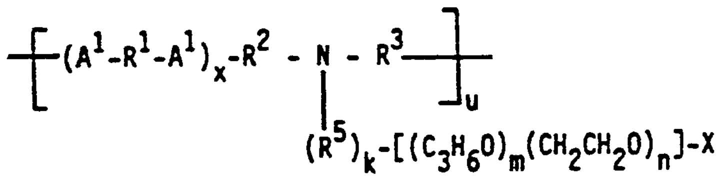

I

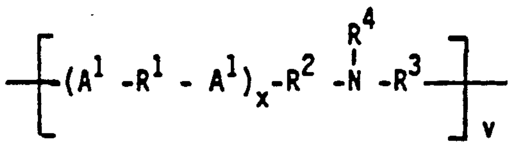

II

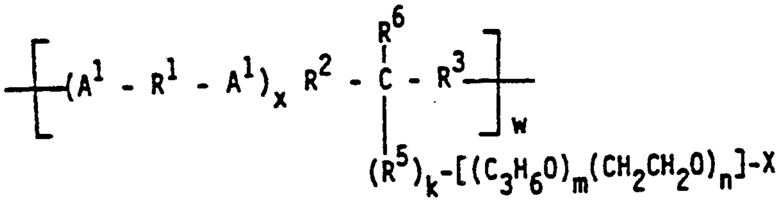

III

ausgewählt sind, worin $A^1$

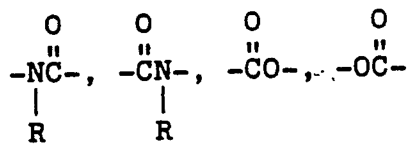 oder 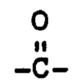 ist;

x 0 oder 1 ist; R H oder $C_1$—$C_4$-Alkyl oder Hydroxyalkyl ist; $R^1$ $C_1$—$C_{12}$-Alkylen, Hydroxyalkylen, Alkenylen, Arylen oder Alkarylen, oder ein $C_2$—$C_3$-Oxyalkylenrest mit 2 bis 20 Oxyalkyleneinheiten ist, mit der Maßgabe, daß keine O—O- oder O—N-Bindungen mit $A^1$ gebildet sind; wenn x 1 ist, $R^2$ —$R^5$— ist, ausgenommen, wenn $A^1$

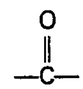

ist, oder —$(OR^7)_y$— oder —$OR^5$— ist, vorausgesetzt, daß keine O—O- oder N—O-Bindungen mit $A^1$ gebildet sind, und $R^3$ —$R^5$— ist, ausgenommen, wenn A

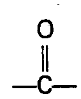

ist, oder —$(R^7O)_y$— oder —$R^5O$— ist vorausgesetzt, daß keine O—O- oder O—N-Bindungen mit $A^1$ gebildet sind; wenn x 0 ist, $R^2$ —$(OR^7)_y$—, —$OR^5$—,

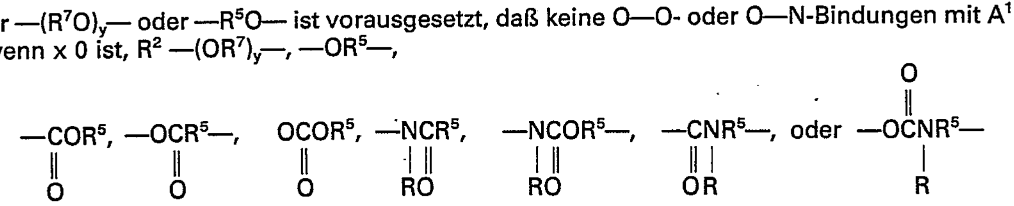

oder

ist, und $R^3$ —$R^5$— ist; $R^4$ $C_1$—$C_4$-Alkyl oder Hydroxyalkyl ist; $R^5$ $C_1$—$C_{12}$-Alkylen, Hydroxyalkylen, Cycloalkylen, Alkenylen, Arylen oder Alkarylen ist; $R^6$ H oder $R^4$ ist; $R^7$ $C_2$—$C_3$-Alkylen oder Hydroxyalkylen ist; X R, $SO_3^-$, oder ein Gemisch davon, ist; k 0 oder 1 ist; m 0 bis 5 ist; n wenigstens 3 ist; m un n solche Zahlen sind, daß der Rest —$(CH_2CH_2O)_n$— wenigstens 85 Gew.-% des Restes —$[(C_3H_6O)_m(CH_2CH_2O)_n]$— ausmacht; y 2 bis 20 ist; und der Zahlenwert von u + v und w derart ist, daß wenigstens 2 N-Gruppen und wenigstens 2 X-Gruppen vorliegen.

33. Eine Zusammensetzung nach Anspruch 32, wobei

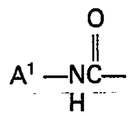 oder 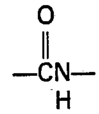 ist;

$R^1$ $C_2$—$C_6$-Alkylen ist; $R^2$ —$OR^5$— oder —$(OR^7)_y$— ist; $R^3$ —$R^5O$— oder —$(R^7O)_y$— ist; $R^4$ Methyl ist; $R^5$ $C_2$—$C_3$-Alkylen ist; $R^6$ H oder $C_1$—$C_3$-Alkyl ist; $R^7$ Ethylen ist; X H oder Methyl ist; k 0 ist; und y 2 bis 12 ist.

34. Eine Zusammensetzung nach Anspruch 33, wobei v und w jeweils 0 sind, und u 3 bis 40 ist.

35. Eine Zusammensetzung nach Anspruch 34, wobei m 0 ist, und n wenigstens 12 ist.

36. Eine Zusammensetzung nach Anspruch 31, wobei das genannte Aminpolymer Einheiten enthält, welche aus jenen der Formeln IV, V und VI:

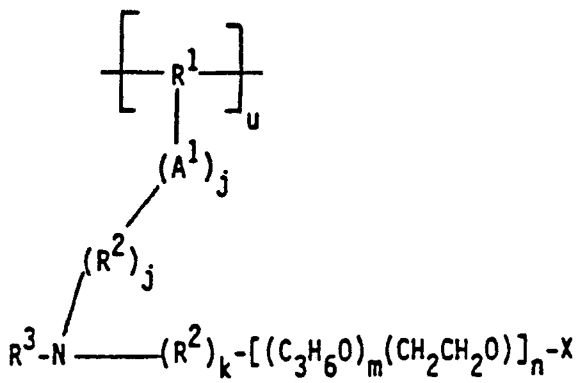

IV

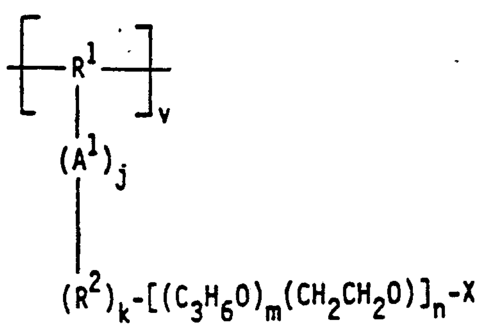

V

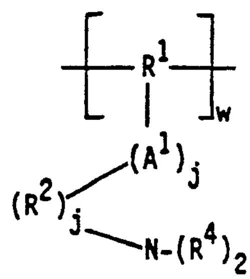

VI

ausgewählt sind, worin $A^1$

-O-, 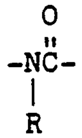, 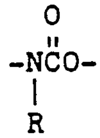, 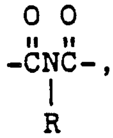, 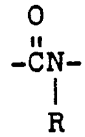,

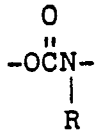, 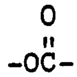, 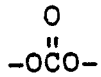, 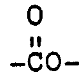 oder 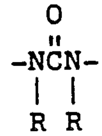 ist;

R H oder $C_1$—$C_4$-Alkyl oder Hydroxyalkyl ist; $R^1$ substituiertes $C_2$—$C_{12}$-Alkylen, Hydroxyalkylen, Alkenylen, Arylen oder Alkarylen, oder $C_2$—$C_3$-Oxyalkylen ist; jeder Rest $R^5$ $C_1$—$C_{12}$-Alkylen, Hydroxyalkylen, Alkenylen, Arylen oder Alkarylen ist; $R^3$ $C_1$—$C_4$-Alkyl oder Hydroxyalkyl, oder der Rest —$(R^2)_k$—$[(C_3H_6O)_m(CH_2CH_2O)_n]$—X ist; jeder Rest $R^4$ $C_1$—$C_4$-Alkyl oder Hydroxyalkyl ist, oder zwei Reste $R^4$ gemeinsam den Rest —$(CH_2)_r$—$A^2$—$(CH_2)_s$— bilden, worin $A_2$ —O— oder —$CH_2$— ist; $R^5$ $C_2$—$C_3$-Alkylen oder Hydroxyalkylen ist; X R, $SO_3^-$, oder ein Gemisch davon, ist; j 1 oder 0 ist; k 1 oder 0 ist; m 0 bis 5 ist; n wenigstens 3 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; r 1 oder 2 ist; s 1 oder 2 ist, und r + s 3 oder 4 ist; und der

Zahlenwert von u, v und w ein solcher ist, daß wenigstens 2 N-Gruppen und wenigstens 2 X-Gruppen vorliegen.

37. Eine Zusammensetzung nach Anspruch 36, wobei

$A^1$ 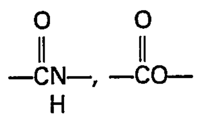 oder —O— ist; $R^1$ 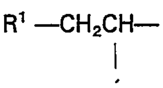 oder 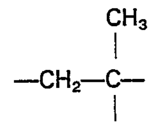 Alkylen ist;

$R^4$ Methyl ist; X H oder Methyl ist; j 1 ist; und k 0 ist.

38. Eine Zusammensetzung nach Anspruch 37, wobei v und w jeweils 0 sind, und u 3 bis 40 ist.

39. Eine Zusammensetzung nach Anspruch 38, wobei m 0 ist, und n wenigstens 12 ist.

40. Eine Zusammensetzung nach Anspruch 31, wobei das genannte Aminpolymer Einheiten enthält, die aus jenen der Formeln VII und VIII:

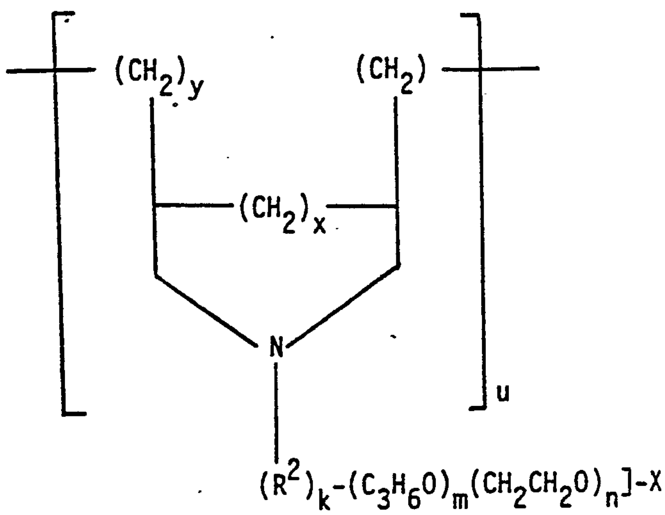

VII

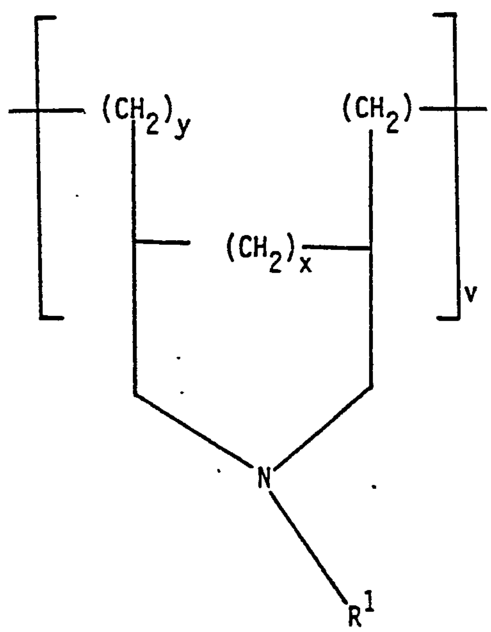

VIII

ausgewählt sind worin $R^1$ $C_1$—$C_4$-Alkyl oder Hydroxyalkyl ist; $R^2$ $C_1$—$C_{12}$-Alkylen, Hydroxyalkylen, Cycloalkylen, Arylen oder Alkarylen ist; X H, $SO_3^-$, oder ein Gemisch davon, ist; k 1 oder 0 ist; m 0 bis 5 ist; n wenigstens 3 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; x 1 oder 0 ist; y 1 ist, falls x 0 ist, und 0 ist, falls x 1 ist; und der Zahlenwert von u und v ein solcher ist, daß wenigstens 2 N-Gruppen und wenigstens 2 X-Gruppen vorliegen.

41. Eine Zusammensetzung nach Anspruch 40, wobei $R^1$ Methyl ist; $R^3$ Methyl ist; X H ist; und k 0 ist.

42. Eine Zusammensetzung nach Anspruch 41, wobei v 0 ist, und u 3 bis 40 ist.

43. Eine Zusammensetzung nach Anspruch 42, wobei m 0 ist, und n wenigstens 12 ist.

44. Eine Zusammensetzung nach Anspruch 31, wobei das genannte Detergens-grenzflächenaktive Mittel aus nichtionischen grenzflächenaktiven Mitteln, anionischen grenzflächenaktiven Mitteln, und gemischen davon, ausgewählt ist.

45. Eine Zusammensetzung nach Anspruch 44, welche weiterhin 0 bis 80 Gew.-% eines Detergensgerüstoffes enthält.

**Revendications**

1. Polymère d'amine éthoxylée soluble dans l'eau ayant des propriétés d'élimination des salissures argileuses et d'antiredéposition, qui comprend un squelette de polymère autre qu'un squelette de polyalkylène-amine, au moins deux groupes M et au moins un groupe L—X, dans lequel M est un groupe amine tertiaire fixé au squelette ou faisant partie de ce squelette; X est un groupe non ionique, un groupe anionique ou un mélange de ceux-ci; et L est une chaîne hydrophile reliant les groupes M et X ou reliant X au squelette; L contient aussi le groupement polyoxyalkylène $—[(R'O)_m(CH_2CH_2O)_n]—$, dans lequel R' est un groupe alkylène ou hydroxyalkylène en $C_3—C_4$, m et n sont des nombres tels que le groupement $—(CH_2CH_2O)_n—$ constitue au moins 50% en poids du groupement polyoxyalkylène, et n est au moins égal à 3, sauf lorsque le squelette est un squelette de polyéthylène-imine, et n est au moins égal à 12 lorsque ce squelette est un squellette de polyéthylène-imine.

2. Polymère selon la revendication 1, dans lequel le squelette est choisi dans le groupe constitué par les polyuréthannes, les polyesters, les polyéthers, les polyamides, les polyimides, les polyacrylates, les polyacrylamides, les poly(éthers vinyliques), les polyalkylènes, les polyalkylarylènes, les polyalkylène-imines, les polyvinylamines, les polyallylamines et les polydiallylamines, les polyvinylpyridines, les polyaminotriazoles, les poly(alcools vinyliques), les aminopolyuréylènes et leurs mélanges.

3. Polymère selon la revendication 2, dans lequel les nombres des groupes M et L—X sont chacun de 3 à 40.

4. Polymère selon la revendication 3, dans lequel m et n sont des nombres tels que le groupement $—(CH_2CH_2O)_n—$ constitue au moins 85% en poids du groupement polyoxyalkylène.

5. Polymère selon la revendication 4, dans lequel m est nul et n est au moins égal à 12.

6. Polymère selon la revendication 5, dans lequel X est un mélange de 0 à 30% de groupes anioniques et de 70 à 100% de groupes non ioniques.

7. Polymère selon la revendication 6, dans lequel le groupe anionique est $SO_3^-$.

8. Polymère selon la revendication 7, dans lequel le groupement non ionique est H.

9. Polymère selon la revendication 1, qui comprend des motifs de formules I, II et III:

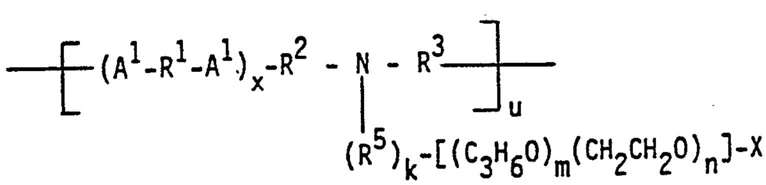

I

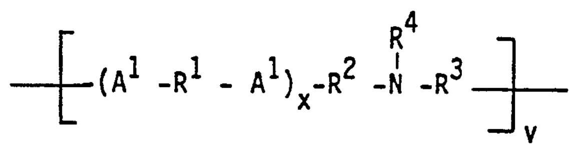

II

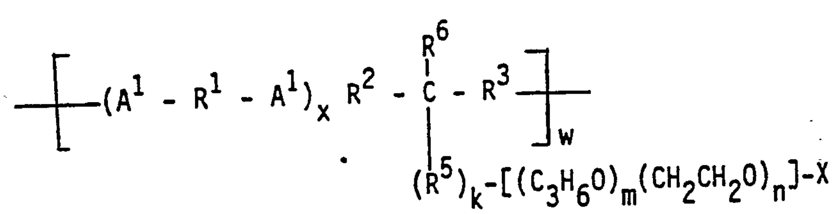

III

dans lesquelles $A^1$ est

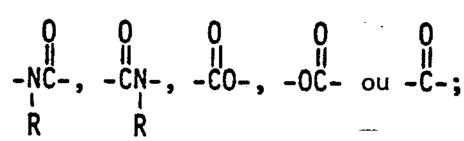

x est nul ou égal à 1; R est H ou un groupe alkyle ou hydroxyalkyle en $C_1—C_4$; $R^1$ est un groupe alkylène, hydroxyalkylène, alcénylène, cycloalkylène, arylène ou alkylarylène en $C_2—C_{12}$, ou un groupement oxyalkylène en $C_2—C_3$ comportant de 2 à 20 motifs oxyalkylène, à condition qu'aucune liaison O—O ou O—N ne se forme avec $A^1$; lorsque x est égal à 1, $R^2$ est $—R^5—$, sauf lorsque $A^1$ est

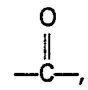

ou est $—(OR^7)_y—$ ou $—OR^5—$, à condition qu'aucune liaison O—O ou N—O ne se forme avec $A^1$, et $R^3$ est $R^5$, sauf lorsque $A^1$ est

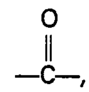

ou est $—(R^7O)_y—$ ou $—R^5O—$, à condition qu'aucune liaison O—O ou O—N ne se forme avec $A^1$; lorsque x est nul, $R^2$ est

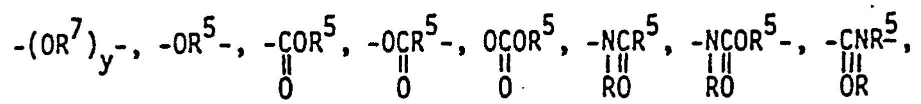

ou 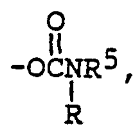, et $R^3$ est $-R^5-$;

$R^4$ est un groupe alkyle ou hydroxyalkyle en $C_1—C_4$; $R^5$ est un groupe alkylène, hydroxyalkylène, cycloalkylène, alcénylène, arylène ou alkylarylène en $C_1—C_{12}$; $R^6$ est H ou $R^4$; $R^7$ est un groupe alkylène ou hydroxyalkylène en $C_2—C_3$; X est R, $SO_3^-$ ou un mélange de ceux-ci; k est nul ou égal à 1; m a une valeur de 0 à 5; n est au moins égal à 3; m et n sont des nombres tels que le groupement $—(CH_2CH_2O)_n—$ constitue au moins 85% en poids du groupement $—[(C_3H_6O)_m(CH_2CH_2O)_n]—$; y a une valeur de 2 à 20; les nombres de u, de v et de w sont tels qu'il y ait au moins deux groupes $N^+$ et au moins deux groupes X.

10. Polymère selon la revendication 9, dans lequel A' est

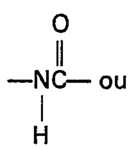 ou 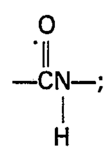;

$R^1$ est un groupe alkylène en $C_2—C_6$. $R^2$ est $—OR^5—$ ou $—(OR^7)_y—$; $R^3$ est $—R^5O—$ ou $—(R^7O)_y—$; $R^4$ est un groupe méthyle; $R^6$ est H ou un groupe alkyle en $C_1—C_3$; $R^7$ est un groupe éthylène; X est H ou un groupe méthyle; k est nul; y a une valeur de 2 à 12.

11. Polymère selon la revendication 10, dans lequel v et w sont chacun nuls et u a une valeur de 3 à 40.

12. Polymère selon la revendication 11, dans lequel m est nul et n est au moins égal à 12.

13. Polymère selon la revendication 1, qui comprend des motifs choisis parmi ceux de formules IV, V et VI:

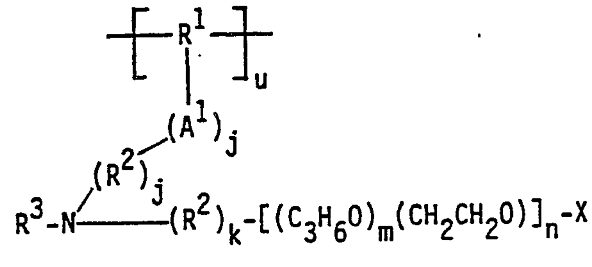

IV

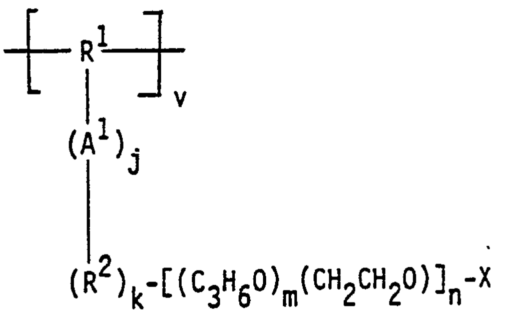 V 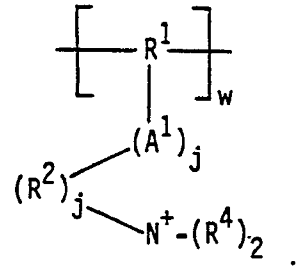 VI

dans lesquelles $A^1$ est

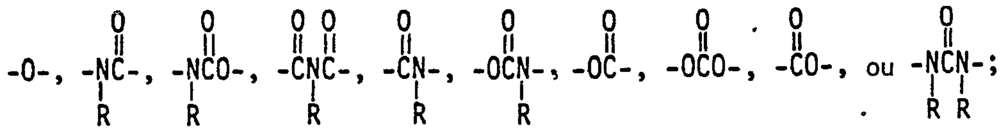

R est H ou un groupe alkyle ou hydroxyalkyle en $C_1$—$C_4$; $R^1$ est un groupe alkylène, hydroxyalkylène, alcénylène, arylène ou alkylarylène substitué en $C_2$—$C_{12}$, ou oxyalkylène substitué en $C_2$—$C_3$; chaque $R^2$ est un groupe alkylène, hydroxyalkylène, alcénylène, arylène ou alkylarylène en $C_1$—$C_{12}$; $R^3$ est un groupe alkyle ou hydroxyalkyle en $C_1$—$C_4$, ou le groupement $—(R^2)_k—[(C_3H_6O)_m(CH_2CH_2O)_n]—$; chaque $R^4$ est un groupe alkyle ou hydroxyalkyle en $C_1$—$C_4$, ou deux $R^4$ forment ensemble le groupement $—(CH_2)_r—A^2—(CH_2)_s—$, dans lequel $A^2$ est —O— ou $—CH_2—$; $R^5$ est un groupe alkylène ou hydroxyalkylène en $C_2$—$C_3$; X est R, $SO_2^-$ ou un mélange de ceux-ci; j est égal à 1 ou 0; k est égal à 1 ou 0; m a une valeur de 0 à 5; n est au moins égal à 3; m et n sont des nombres tels que le groupement $—(CH_2CH_2O)_n—$ constitue au moins 85% en poids du groupement $—[(C_3H_6O)_m(CH_2CH_2O)_n]—$; r est égal à 1 ou 2, s est égal à 1 ou 2 et r + s est égal à 3 ou 4; les nombres de u, de v et de w sont tels qu'il y ait au moins deux groupes N et au moins deux groupes X.

14. Polymère selon la revendication 13, dans lequel $A^1$ est

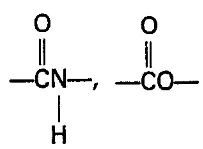 ou —O—; $R^1$ est $—CH_2CH—$ ou 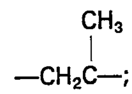

$R^3$ est un groupe méthyle; chaque $R^4$ est un groupe méthyle; X est H ou un groupe méthyle; j est égal à 1; k est nul.

15. Polymère selon la revendication 14, dans lequel v et w sont chacun nuls et u a une valeur de 3 à 40.

16. Polymère selon la revendication 15, dans lequel m est nul et n est au moins égal à 12.

17. Polymère selon la revendication 1, qui comprend des motifs choisis parmi ceux de formule générale VII:

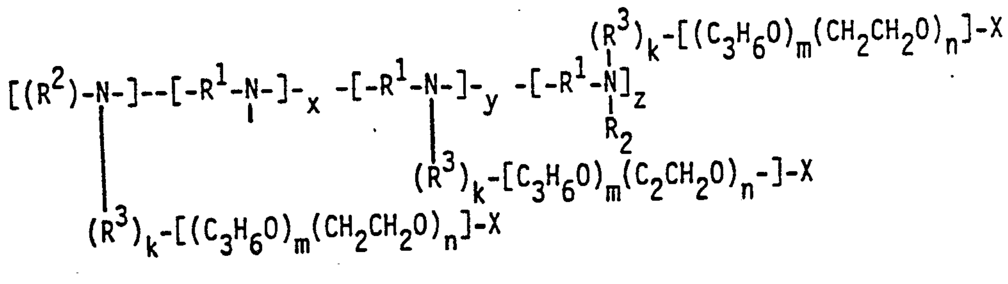 VII

dans laquelle $R^1$ est un groupe alkylène, hydroxyalkylène, alcénylène, cycloalkylène, arylène ou alkylarylène en $C_2$—$C_{12}$, ou un groupement polyoxyalkylène en $C_2$—$C_3$ comportant de 2 à 20 motifs oxyalkylène; chaque $R^2$ est un groupe alkyle ou hydroxyalkyle en $C_1$—$C_4$, le groupement $—(R^2)_k—[(C_3H_6O)_m(CH_2CH_2O)_n]—X$, ou deux $R^2$ forment ensemble le groupement $—(CH_2)_r—A—(CH_2)_s—$, dans lequel A est —O— ou $—CH_2—$; $R^3$ est un groupe alkylène, hydroxyalkylène, alcénylène, arylène ou alkylarylène en $C_1$—$C_{12}$; X est H, $SO_3^-$ ou un mélange de ceux-ci; k est égal à 1 ou 0; m a une valeur de 0 à 5; n est au moins égal à 12; m et n sont des nombres tels que le groupement $—(CH_2CH_2O)_n—$ constitue au

moins 85% en poids du groupement —$[(C_3H_6O)_m(CH_2CH_2O)_n]$—; x + y + z est au moins égal à 10.

18. Polymère selon la revendication 17, dans lequel $R^1$ est un groupe alkylène en $C_2$—$C_3$; $R^2$ est un groupe méthyle ou le groupement —$[(C_3H_6O)_m(CH_2CH_2O)_n]$—X; S est H; k est nul.

19. Polymère selon la revendication 18, dans lequel m est nul.

20. Polymère selon la revendication 1, qui comprend des motifs choisis parmi ceux de formules IX et X;

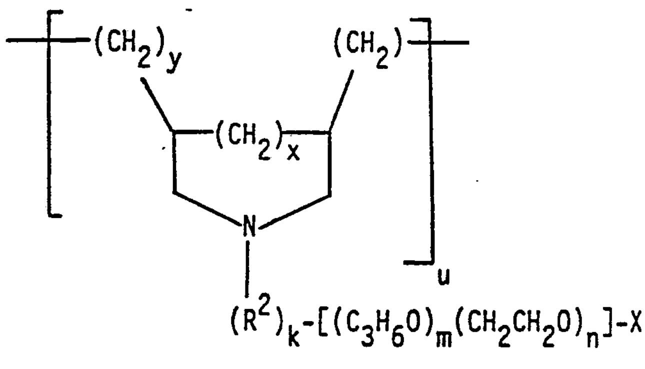

IX

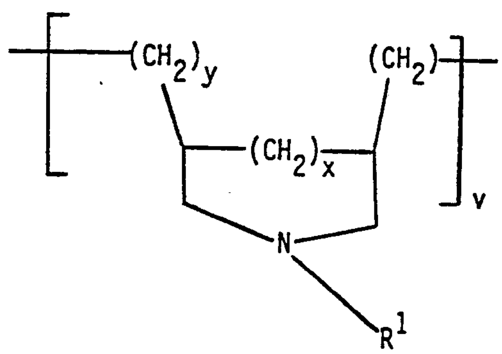

X

dans lesquelles $R^1$ est un groupe alkyle ou hydroxyalkyle en $C_1$—$C_4$; $R^2$ est un groupe alkylène, hydroxyalkyène cycloalkylène, arylène ou alkylarylène en $C_1$—$C_{12}$; X est H, $SO_3^-$ ou un mélange de ceux-ci; k est égal à 1 ou 0; m a une valeur de 0 à 5; n est au moins égal à 3; m et n sont des nombres tels que le groupement —$(CH_2CH_2O)_n$— constitue au moins 85% en poids du groupement —$[(C_3H_6O)_m(CH_2CH_2O)_n]$—; x est égal à 1 ou 0; y est égal à 1 lorsque x est nul et à 0 lorsque x est égal à 1; les nombres de u et de v sont tels qu'il y ait au moins deux groupes N et au moins deux groupes X.

21. Polymère selon la revendication 20, dans lequel $R^1$ est un groupe méthyle; $R^3$ est un groupe méthyle; X est H; k est nul.

22. Polymère selon la revendication 21, dans lequel v est nul et u a une valeur de 3 à 40.

23. Polymère selon la revendication 22, dans lequel m est nul et n est au moins égal à 12.

24. Composition détergente, qui comprend:

(a) de 1 à 75% en poids d'un tensioactif détergent non ionique, anionique, ampholyte, zwittérionique ou cationique ou d'un mélange de ceux-ci; et

(b) de 0,05 à 95% en poids d'un polymère d'amine éthoxylée ayant des propriétés d'élimination des sailssures argileuses et d'antiredéposition, qui comprend un squelette de polymère autre qu'un squelette de polyalkylène-amine ou de polyalkylène-imine, au moins deux groupes M et au moins un groupe L—X, où M est un groupe amine tertiaire fixé au squelette ou faisant partie de ce squelette; X est un groupe non ionique, un groupe anionique ou un mélange de ceux-ci; et L est un chaîne hydrophile reliant les groupes M et X ou reliant X audit squelette; L contient aussi le groupement polyoxyalkylène —$[(R'O)_m(CH_2CH_2O)_n]$—, dans lequel R' est un groupe alkylène ou hydroxyalkylène en $C_3$—$C_4$, m et n sont des nombres tels que le groupement —$(CH_2CH_2O)_n$— constitue au moins 50% en poids du groupement polyoxyalkylène, et n est au moins égal à 3.

25. Composition selon la revendication 24, dans laquelle le squelette est choisi dans le groupe constitué par les polyuréthannes, les polyesters, les polyéthers, les polyamides, les polyimides, les polyacrylates, les polyacrylamides, les poly(éthers vinyliques), les polyalkylènes, les polyalkylarylènes, les polyvinylamines, les polyallylamines, les polydiallylamines, les polyvinylpyridines, les polyaminotriazoles, les poly(alcool vinylique), les aminopolyuréylènes et leurs mélanges.

26. Composition selon la revendication 25, dans laquelle le groupement polyoxyalkylène est entièrement constitué par le groupement —$(CH_2CH_2O)_n$—.

27. Composition selon la revendication 26, dans laquelle n est au moins égal à 12.

28. Composition selon la revendication 27, dans laquelle X est un mélange de 0 à 30% de groupes anioniques et de 70 à 100% de groupes non ioniques.

29. Composition selon la revendication 28, dans laquelle le groupe non ionique est H.

30. Composition selon la revendication 29, dans laquelle les nombres des groupes M et L—X sont chacun de 3 à 40.

31. Composition selon la revendication 23, dans laquelle le polymère d'amine constitue de 0,1 à 10% en poids de la composition.

32. Composition selon la revendication 31, dans laquelle le polymère d'amine comprend des motifs choisis parmi ceux de formules I, II et III:

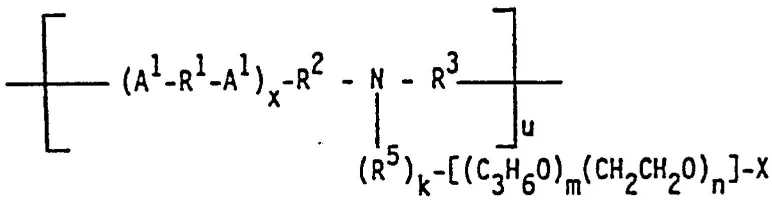

I

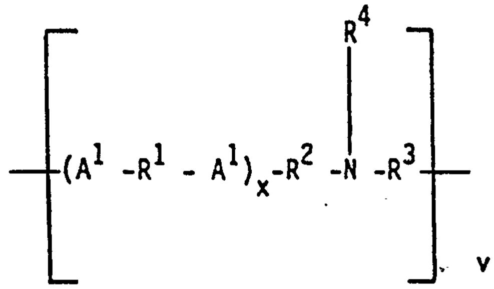

II

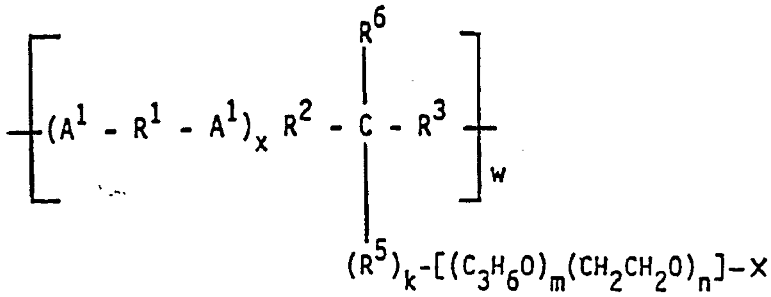

III

dans lesquelles $A^1$ est

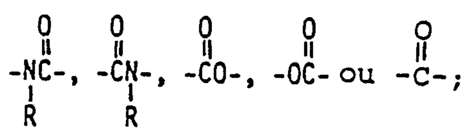

x est nul ou égal à 1; R est H ou un groupe alkyle ou hydroxyalkyle en $C_1$—$C_4$; $R^1$ est un groupe alkylène, hydroxyalkylène, alcénylène, arylène ou alkylarylène en $C_2$—$C_{12}$, ou un groupement oxyalkylène en $C_2$—$C_3$ comportant de 2 à 20 motifs oxyalkylène, à condition qu'aucune liaison O—O ou O—N ne se forme avec $A^1$; lorsque x est égal à 1, $R^2$ est —$R^5$—, sauf lorsque $A^1$ est

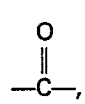

ou est —$(R^7O)_y$— ou —$OR^5$—, à condition qu'aucune liaison O—O ou N—O ne se forme avec $A^1$, et $R^3$ est —$R^5$—, sauf lorsque $A^1$ est

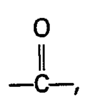

ou est $-(RO^7)_y-$ ou $-R^5O-$, à condition qu'aucune O—O ou O—N ne se forme avec $A^1$; lorsque x est nul, $R^2$ est $-(OR^7)_y-$, $-OR^5-$,

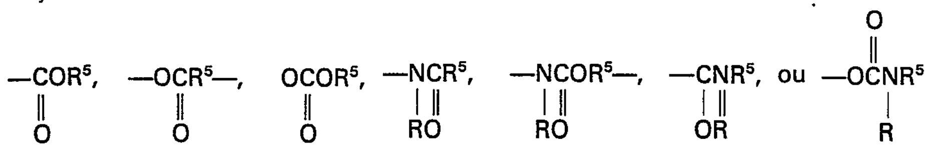

et $R^3$ est $-R^5-$; $R^4$ est un groupe alkyle ou hydroxyalkyle en $C_1-C_4$; $R^5$ est un groupe alkylène, hydroxyalkylène, alcénylène, cycloalkylène, arylène ou alkylarylène en $C_1-C_{12}$; $R^6$ est H ou $R^4$; $R^7$ est un groupe alkylène ou hydroxyalkylène en $C_2-C_3$; X est R, $-SO_3-$ ou un mélange de ceux-ci; k est nul ou égal à 1; m a une valeur de 0 à 5; n est au moins égal à 3; m et n sont des nombres tels que le groupement $-(CH_2CH_2O)_n-$ constitue au moins 85% en poids du groupement $-[(C_3H_6O)_m(CH_2CH_2O)_n]$; y a une valeur de 2 à 20; les nombres de u, de v et de w sont tels qu'il y ait au moins deux centres N et au moins deux groupes X.

33. Composition selon la revendication 32, dans laquelle A' est

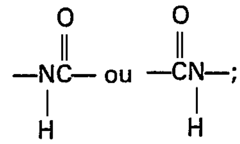

$R^1$ est un groupe alkylène en $C_2-C_6$; $R^2$ est $-OR^5-$ ou $-(OR^7)_y-$; $R^3$ est $-R^5O-$ ou $-(R^7O)_y-$; $R^4$ est un groupe méthyle; $R^5$ est un groupe alkylène en $C_2-C_3$ $R^6$ est H ou un groupe alkyle en $C_1-C_3$; $R^7$ est H un éthylène; X est H ou un groupe méthyle; k est nul; y a une valeur de 2 à 12.

34. Composition selon la revendication 33, dans laquelle v et w sont chacun nuls et u a une valeur de 3 à 40.

35. Composition selon la revendication 34, dans laquelle m est nul et n est au moins égal à 12.

36. Composition selon la revendication 31, dans laquelle le polymère d'amine comprend des motifs choisis parmi ceux de formules IV, V et VI:

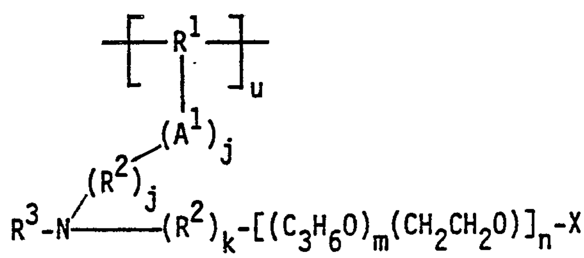

IV

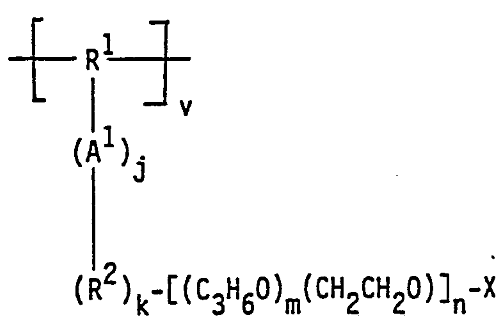

V

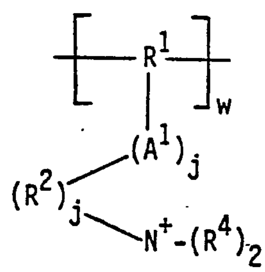

VI

dans lesquelles $A^1$ est

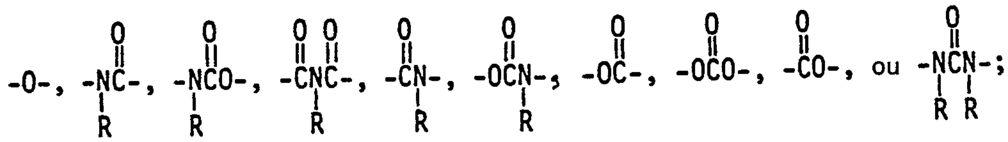

R est H ou un groupe alkyle ou hydroxyalkyle en $C_1$—$C_4$; $R^1$ est un groupe alkylène, hydroxyalkylène, alcénylène, arylène ou alkylarylène substitué en $C_2$—$C_{12}$, où oxyalkylène en $C_2$—$C_3$; chaque $R^2$ est un groupe alkylène, hydroxyalkylène, alcénylène, arylène ou alkylarylène en $C_1$—$C_{12}$; $R^3$ est un groupe alkyle ou hydroxyalkyle en $C_1$—$C_4$ ou le groupement $—(R^2)_k—[(C_3H_6O)_m(CH_2CH_2O)_n]—X$; chaque $R^4$ est un groupe alkyle ou hydroxyalkyle en $C_1$—$C_4$, ou deux $R^4$ forment ensemble le groupement $—(CH_2)_r—A^2—(CH_2)_s—$, dans lequel $A^2$ est —O— ou $—CH_2—$; $R^5$ est un groupe alkylène ou hydroxyalkylène en $C_2$—$C_3$; X est R, $SO_2^-$ ou un mélange de ceux-ci; j est égal à 1 ou 0; k est égal à 1 ou 0; m a une valeur de 0 à 5; n est au moins égal à 3; n et m sont des nombres tels que le groupement $—(CH_2CH_2O)_n—$ constitue au moins 85% en poids du groupement $—[(C_3H_6O)_m(CH_2CH_2O)_n]—$; r est égal à 1 ou 2, s est égal à 1 ou 2 et r + s est égal à 3 ou 4; les nombres de u, de v et de w sont tels qu'il y ait au moins deux groupes N et au moins deux groupes X.

37. Composition selon la revendication 36, dans laquelle $A^1$ est

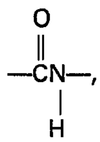, 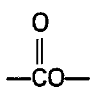 ou —O—; $R^1$ est 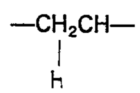 ou 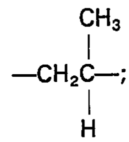;

$R^4$ est un groupe méthyle; X est H ou un groupe méthyle; j est égal à 1; k est nul.

38. Composition selon la revendication 37, dans laquelle v et w sont chacun nuls et u a une valeur de 3 à 40.

39. Composition selon la revendication 38, dans laquelle m est nul et n est au moins égal à 12.

40. Composition selon la revendication 31, dans laquelle le polymère d'amine comprend des motifs de formules VII et VIII:

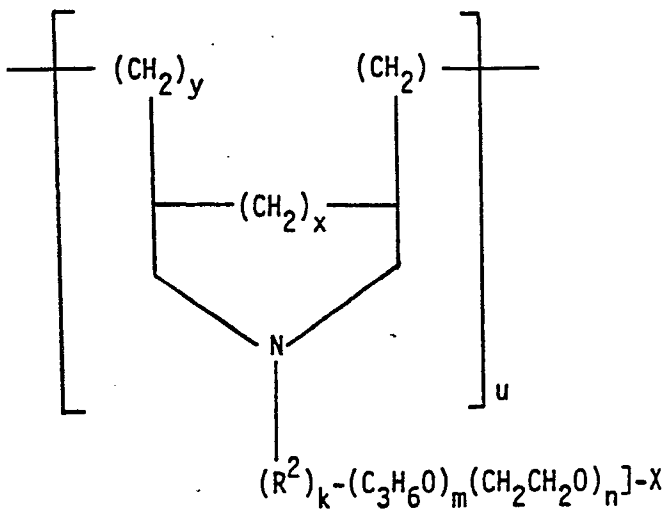

VII

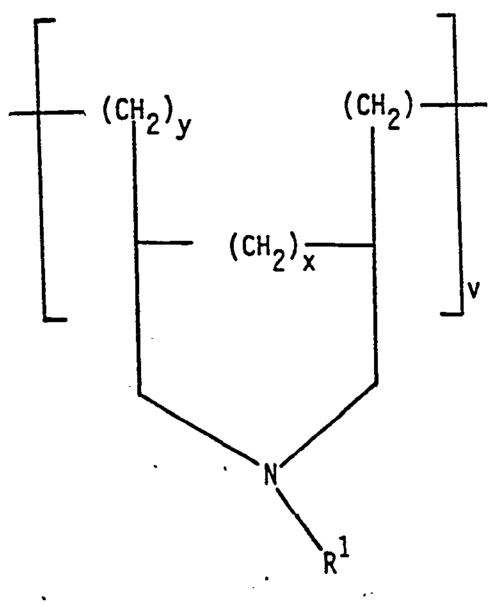

VIII

dans lesquelles $R^1$ est un groupe alkyle ou hydroxyalkyle en $C_1$—$C_4$; $R^2$ est un groupe alkylène, hydroxyalkylène, cycloalkylène, arylène ou alkylarylène en $C_1$—$C_{12}$; X est H, $SO_3^-$ ou un mélange de ceux-ci; k est égal à 1 ou 0; m a une valeur de 0 à 5; n est au moins égal à 3; m et n sont des nombres tels que le groupement $-(CH_2CH_2O)_n-$ constitue au moins 85% en poids du groupement $-[(C_3H_6O)_m(CH_2CH_2O)_n]-$; x est égal à 1 ou 0; y est égal à 1 lorsque x est nul et à 0 lorsque x est égal à 1; les nombres de u et de v sont tels qu'il y ait au moins deux groupes N et au moins deux groupes X.

41. Composition selon la revendication 40, dans laquelle $R^1$ est un groupe méthyle; $R^3$ est un groupe méthyle; X est H; k est nul.

42. Composition selon la revendication 41, dans laquelle v est nul et u a une valeur de 3 à 40.

43. Composition selon la revendication 42, dans laquelle m est nul et n est au moins égal à 12.

44. Composition selon la revendication 31, dans laquelle le tensioactif détergent est choisi parmi les tensioactifs non ioniques, les tensioactifs anioniques et leurs mélanges.

45. Composition selon la revendication 44, comprenant en outre de 0 à 80% en poids d'un adjuvant de détergence.